(19)

**Europäisches Patentamt**
**European Patent Office**
**Office européen des brevets**

(11) **EP 4 552 838 A1**

(12) **EUROPEAN PATENT APPLICATION**
published in accordance with Art. 153(4) EPC

(43) Date of publication:
**14.05.2025 Bulletin 2025/20**

(21) Application number: **23835597.8**

(22) Date of filing: **06.07.2023**

(51) International Patent Classification (IPC):
*B32B 3/30* (2006.01)   *B32B 27/00* (2006.01)
*B32B 27/30* (2006.01)

(52) Cooperative Patent Classification (CPC):
**B32B 3/30; B32B 27/00; B32B 27/30**

(86) International application number:
**PCT/JP2023/025150**

(87) International publication number:
**WO 2024/010066 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.07.2022 JP 2022109034**

(71) Applicant: **Toppan Holdings Inc.**
**Tokyo 110-0016 (JP)**

(72) Inventor: **AOKI, Eishi**
**Tokyo 110-0016 (JP)**

(74) Representative: **TBK**
**Bavariaring 4-6**
**80336 München (DE)**

(54) **DECORATIVE SHEET AND METHOD FOR MANUFACTURING DECORATIVE SHEET**

(57)     Provided is a decorative sheet that has low gloss and satisfies all of fingerprint resistance, scratch resistance, stain resistance, weather resistance, and bending processability. Therefore, a decorative sheet (1) includes a primary film layer (2), a transparent ridged layer (5), and a surface protective layer (6) laminated in this order, wherein asperities having ridge parts protruding in a ridged shape are formed on the transparent ridged layer (5), and the relationship between a film thickness TA of the surface protective layer (6) on a raised portion of the transparent ridged layer (5) and a film thickness TB of the surface protective layer (6) on a recessed portion of the transparent ridged layer (5) satisfies $0.1 \leq TA/TB \leq 2.0$.

# FIG.1

EP 4 552 838 A1

**Description**

[Technical Field]

The present invention relates to a decorative sheet that is used, for example, for surface decoration of the interior and exterior of buildings, fixtures, furniture, construction materials, floor materials, and the like, and a method for producing the decorative sheet.

[Background Art]

In recent years, as shown in PTL 1, a number of decorative sheets in which olefin-based resin is used (e.g., polypropylene sheets) have been proposed as alternative decorative sheets to polyvinyl chloride decorative sheets, for which environmental protection issues are a concern. Since these decorative sheets do not use vinyl chloride resin, the generation of toxic gases and the like at the time of incineration is suppressed.

Decorative sheets are widely used in buildings to impart designability and durability to their surfaces by bonding them to the surface of wood, wood boards, metal plates, non-flammable boards, paper substrates, or resin substrates with adhesives to form decorative plates. Designability can be selected according to the requirements and applications, ranging from patterns, such as wood grain and stone grain, formed by various printing methods to plain surfaces without patterns. Similarly, surface gloss is also an important item for designability, and is selected according to the requirements and applications, ranging from high gloss, such as a mirror-like surface, to low gloss with no reflection at all. Moreover, another important function of decorative sheets along with designability is to impart durability. Durability is a comprehensive evaluation of scratch resistance and stain resistance, as well as whether they can be maintained over a long period of time. Decorative sheets are used for interior decoration materials of housings and public facilities, exterior decoration materials for front doors or the like, surface materials for fixtures, and surface materials for home appliances. Since these decorative sheets may be exposed to direct sunlight, wind, or rain on a daily basis, high weather resistance is required. For example, PTLs 2 to 5 each describe a decorative sheet which contains a photostabilizer, an ultraviolet absorber, and the like to thereby improve weather resistance.

In order to impart durability, it is common to form a surface protective layer on the outermost surface of the decorative sheet. In order to adjust the gloss mentioned above, particularly in order to achieve low gloss, it is common to add a matting agent (matting additive) to the surface protective layer. As a decorative sheet in which designability (low gloss), scratch resistance, and stain resistance are thus taken into consideration, for example, there is the decorative sheet disclosed in PTL 6. In recent years, due to the expansion of applications of decorative plates using decorative sheets and the increasing sophistication of consumer quality, there is a need to satisfy all of low gloss, fingerprint resistance, scratch resistance, and bending processability; however, the method of roughening the surface by adding a high concentration of a matting agent causes the following problems when a large amount thereof is added.

(1) Fingerprint stains are harder to remove, and fingerprint resistance is reduced.

(2) In a scratch resistance test, the matting agent is removed, and scratch resistance is reduced.

(3) Stains are harder to remove, and stain resistance is reduced.

(4) Blushing is triggered by the matting agent during the bending process, and bending processability is reduced.

In response to such problems, PTLs 7 and 8 each have proposed a method for producing a low-gloss decorative sheet, without adding a high concentration of a matting agent, by forming wrinkles using excimer light at a wavelength of less than 200 nm. However, it is difficult to ensure sufficient scratch resistance in resin materials where the outermost layer is wrinkled by excimer light. In addition, photostabilizers inhibit wrinkle formation caused by excimer light, making it impossible to ensure sufficient weather resistance.

[Citation List]

[Patent Literature]

PTL 1: JP 3271022 B

PTL 2: WO2018/101349

PTL 3: WO2018/221610

PTL 4: WO2019/244986

PTL 5: WO2020/022384

PTL 6: JP 2019-119138 A

PTL 7: WO2021/201105

PTL 8: JP 2022-008024 A

[Summary of the Invention]

[Technical Problem]

Conventionally, if a high concentration of a matting agent is added for achieving low gloss, fingerprint resistance, scratch resistance, stain resistance, and blushing resistance are reduced, and if wrinkles are formed using excimer light, weather resistance is reduced because a sufficient amount of photostabilizer cannot be added. Accordingly, it is required to satisfy both low gloss and various physical properties.

The present invention was made by focusing on the above points, and an object thereof is to provide a decorative sheet that has low gloss and excellent designability, and also has fingerprint resistance, a high degree of durability (particularly scratch resistance, stain resistance, and weather resistance), and processability.

[Solution to Problem]

The present inventor found that in order to achieve low gloss, the asperities of a transparent ridged layer should be optimized and further combined with a surface protective layer, whereby a decorative sheet that has low gloss and has fingerprint resistance, a high degree of durability (particularly scratch resistance, stain resistance, and weather resistance), and processability can be provided.

In order to achieve this object, a decorative sheet according to an embodiment of the present invention includes a primary film layer, a transparent ridged layer, and a surface protective layer laminated in this order, wherein the transparent ridged layer has asperities having ridge parts protruding in a ridged shape on a surface of the surface protective layer side, and the relationship between a film thickness TA of the surface protective layer on a raised portion of the transparent ridged layer and a film thickness TB of the surface protective layer on a recessed portion of the transparent ridged layer satisfies $0.1 \leq TA/TB \leq 2.0$.

Further, a method for producing a decorative sheet according to another embodiment of the present invention is characterized in that a surface of an ionizing radiation curable resin applied to a primary film layer is irradiated with light at a wavelength of 200 nm or less, and then irradiated with ionizing radiation or UV light, thereby forming a surface protective layer having ridge parts protruding in a ridged shape.

[Advantageous Effects of the Invention]

According to an embodiment of the present invention, it is possible to provide a decorative sheet that has low gloss and satisfies all of fingerprint resistance, scratch resistance, stain resistance, weather resistance, and bending processability.

[Brief Description of the Drawings]

Fig. 1 is a schematic cross-sectional view showing an example of the configuration of a decorative sheet according to an embodiment of the present invention.

Fig. 2 is a schematic cross-sectional view showing an example of the configuration of a decorative sheet according to another embodiment of the present invention.

Fig. 3 is a schematic cross-sectional view showing an example of the configuration of a transparent ridged layer of the decorative sheet according to the present invention.

Fig. 4 is a two-dimensional image showing a surface configuration example of a transparent ridged layer of a decorative sheet according to an embodiment of the present invention.

Fig. 5 is a schematic cross-sectional view showing a configuration example of a transparent ridged layer and a surface protective layer of a decorative sheet according to an embodiment of the present invention.

[Description of the Embodiments]

A decorative sheet according to an embodiment of the present invention will be described below with reference to the drawings.

The drawings are schematic, and the relationship between the thickness and the horizontal dimension, the thickness ratio between each layer, and the like differ from actual values. The embodiments described below are merely examples of configurations for embodying the technical idea of the present invention, and the technical idea of the present invention does not limit the materials, shapes, structures, and the like of the components to those described below. The technical idea of the present invention may be altered in various manners within the scope of the claims.

(Configuration)

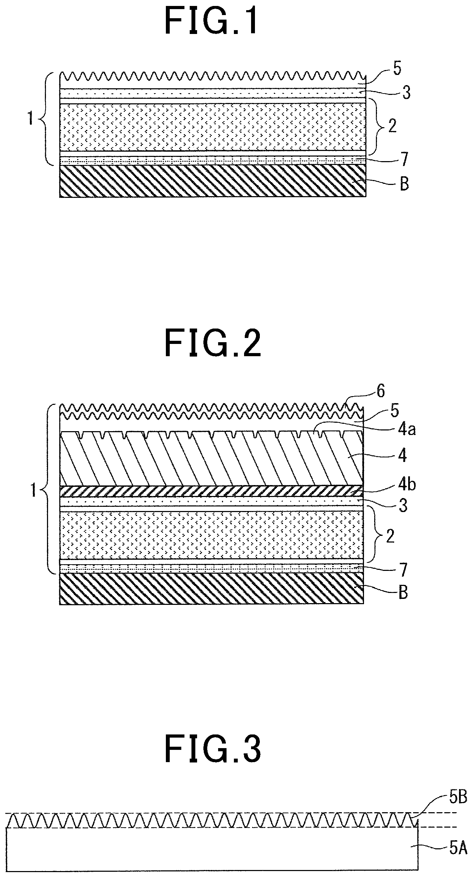

As shown in Fig. 1, a decorative sheet 1 according to an embodiment of the present invention is configured such that a transparent ridged layer 5 is laminated on the front side, which is one side of a primary film layer (substrate layer) 2. The designability of the decorative sheet 1 may be enhanced, if necessary, by forming a pattern layer 3 on the front side of the primary film layer 2, and forming the transparent ridged layer 5 thereon. Further, as shown in Fig. 2, in the decorative sheet 1, a transparent resin layer 4 may be laminated on the front side of the primary film layer 2 between the pattern layer 3 and the transparent ridged layer 5, and a surface protective layer 6 may be further laminated on the transparent ridged layer 5.

Depending on design requirements, an irregular pattern (embossed pattern 4a) may be imparted to the transparent resin layer 4 by embossing. It is also possible to embed ink in the embossed pattern 4a to further enhance designability. If there is a problem in the adhesion between the pattern layer 3 and the transparent resin layer 4, an adhesive resin layer 4b may be provided, as appropriate. When the adhesive resin layer 4b is provided, the transparent resin layer 4 and the adhesive resin layer 4b are formed by coextrusion. The adhesive resin layer 4b may be, for example, made of a resin, such as polypropylene, polyethylene, or acrylic, modified with acid. The thickness of the adhesive resin layer 4b is preferably 2 $\mu$m or greater for the purpose of improving adhesion. Further, from requirements such as scratch resistance, it is also possible to laminate multiple layers of at least one of the transparent resin layer 4, the transparent ridged layer 5, and the surface protective layer 6, and other known layers may be placed in consideration of the adhesion between the layers.

In Fig. 1, the reference symbol B represents a substrate. The substrate B is a substrate to which the decorative sheet 1 is to be bonded together. The substrate B is not particularly limited, but may be made of, for example, a wood board, an inorganic board, a metal plate, a composite board made of multiple materials, or the like. A primer layer 7, a concealing layer (not shown), and the like may be provided, as appropriate, between the decorative sheet 1 and the substrate B.

Next, each layer forming the decorative sheet 1 will be described.

(Primary film layer 2)

As the primary film layer 2, it is possible to use any material selected from, for example, paper, synthetic resin, foamed synthetic resin, rubber, nonwoven fabric, synthetic paper, and metal foil. Examples of the paper include tissue paper, titanium paper, resin-impregnated paper, and the like. Examples of the synthetic resins include polyethylene, polypropylene, polybutylene, polystyrene, polycarbonate, polyester, polyamide, an ethylene-vinyl acetate copolymer, polyvinyl alcohol, acrylic, and the like. Examples of the rubber include ethylene-propylene copolymer rubber, ethylene-propylene-diene copolymer rubber, styrene-butadiene copolymer rubber, styreneisoprene-styrene block copolymer rubber, styrene-butadiene-styrene block copolymer rubber, polyurethane, and the like. As the non-woven fabric, an organic or inorganic non-woven fabric can be used. Examples of the metal of the metal foil include aluminum, iron, gold, silver, and the like. The primary film layer 2 may be a sheet composed of the same resin composition as in the transparent resin layer 4. In this case, the primary film layer 2 is obtained by molding a resin material or a resin composition into a film. Examples of the molding method include calendar molding, extrusion molding, and the like.

The primary film layer 2 preferably has a color layer obtained by mixing an inorganic pigment with a synthetic resin, and a skin layer composed of a synthetic resin. The thickness of the skin layer is preferably 3 $\mu$m or greater and 20 $\mu$m or less, and the thickness ratio of the skin layer and the color layer is preferably from 1:6 to 1:50. In the case of forming the primary film layer 2 by a coextrusion method, if the color layer is the outermost layer, the pigment components contained in the color layer bleed out, which contaminates the T-die of the extruder and the rolls during transportation. Accordingly, the outermost layer is preferably a skin layer that does not contain a pigment. It is preferred to provide a skin layer on both sides of the color layer. When the skin layer is thickened to increase the ratio relative to the color layer, the ratio of the color layer decreases, thus reducing concealability, which is not preferable.

It is important that the primary film layer 2 has a thickness of 50 $\mu$m or greater and 150 $\mu$m or less. If the thickness of the primary film layer 2 is less than 50 $\mu$m, the performance in covering the unevenness of the base (noncontinuity) is poor, which is not preferable. Furthermore, even if the elastic modulus is increased, the film strength is insufficient, making it difficult to prevent defects during printing and the deterioration of scratch resistance. In contrast, if the thickness of the primary film layer 2 exceeds 150 $\mu$m, there may be problems, such as blushing and cracking, in bending process.

(Inorganic pigment)

As the inorganic pigment, a known inorganic pigment, typified by titanium oxide, can be used to impart concealability. The primary film layer 2 plays the role of concealing the pattern of the substrate B. In order to achieve concealability required from the viewpoint of the designability of the decorative sheet 1, the light transmittance is preferably 40% or less. If concealability is low, the pattern of the pattern layer 3 and the pattern of the substrate B are mixed, which is not preferable. Due to the presence of an inorganic pigment, a decorative sheet 1 with good concealability can be obtained. The amount of inorganic pigment mixed is preferably 5 parts by mass or greater and 50 parts by mass or less relative to 100 parts by mass of the resin material. If the amount of inorganic pigment is low, concealability is poor, and if the amount of inorganic pigment is 50 parts by mass or greater, the primary film layer 2 becomes brittle, which is not preferable. The contained inorganic pigment is not particularly limited, and examples include natural inorganic pigments and synthetic inorganic pigments. Examples of the natural inorganic pigments include earth pigments, fired earth, mineral pigments, and the like. Examples of the synthetic inorganic pigments include oxide pigments, hydroxide pigments, sulfide pigments, silicate pigments, phosphate pigments, carbonate pigments, metal powder pigments, carbon pigments, and the like. As the synthetic inorganic pigment, a mixed pigment of one or more natural inorganic pigments and synthetic inorganic pigments may be used. Moreover, as the synthetic inorganic pigment, an organic pigment such as carbon black may be used in combination.

Further, the inorganic pigment may contain additives such as fatty acid metal salts in order to enhance dispersibility and improve extrusion suitability.

(Pattern layer 3)

A pattern layer 3 can be provided on the surface of the primary film layer 2 to add a design pattern to the decorative sheet 1. Examples of the design pattern include wood grain patterns, stone grain patterns, sand patterns, tiling patterns, brick patterns, fabric patterns, grain leather patterns, geometric patterns, and the like.

When an olefin-based substrate with an inert surface is used as the primary film layer 2, the front and rear sides of the primary film layer 2 are preferably processed with a treatment such as a corona treatment, plasma treatment, ozone treatment, electron beam treatment, ultraviolet ray treatment, or bichromate treatment.

Further, a base solid ink layer (not shown) may be provided between the primary film layer 2 and the pattern layer 3 according to the intended design. The base solid ink layer is provided covering the entire primary film layer 2. If necessary, the base solid ink layer may be a multilayer having two or more layers to achieve concealability or the like. Furthermore, the pattern layer 3 may be formed by laminating as many layers as necessary for expression of the desired design. Thus, the patterned layer 3 and the base solid ink layer can be combined in various ways according to the required design, that is to say, the design to be expressed. However, the combinations are not particularly limited.

The material forming the base solid ink layer and the patterned layer 3 is not particularly limited. As the material forming the base solid ink layer and the patterned layer 3, for example, printing ink in which a matrix and a coloring agent, such as dye or pigment, are dissolved and dispersed in a solvent, or a coating agent, can be used. Examples of the matrix include various synthetic resins, such as oily nitrocellulose resin, two-component urethane resin, acrylic-based resin, styrene-based resin, polyester-based resin, urethane-based resin, polyvinyl-based resin, alkyd resin, epoxy-based resin, melamine-based resin, fluororesin, silicone-based resin, and rubber-based resin; mixtures thereof, copolymers thereof, and the like. Furthermore, examples of the coloring agent include inorganic pigments, such as carbon black, titanium white, zinc white, rouge, chrome yellow, Prussian blue and cadmium red; organic pigments, such as azo pigments, lake pigments, anthraquinone pigments, phthalocyanine pigments, isoindolinone pigments and dioxazine pigments; and mixtures thereof. Moreover, examples of the solvent include toluene, xylene, ethyl acetate, butyl acetate, methyl alcohol, ethyl alcohol, isopropyl alcohol, acetone, methyl ethyl ketone, methyl isobutyl ketone, cyclohexanone, water, and mixtures thereof.

Further, in order to impart various functions, functional additives, such as an extender pigment, a plasticizer, a dispersant, a surfactant, a tackifier, an adhesive aid, a drying agent, a curing agent, a curing accelerator, and a curing retarder, may be added to the base solid ink layer and the pattern layer 3.

The base solid ink layer and the pattern layer 3 can be formed, for example, by various printing methods, such as a gravure printing method, offset printing method, screen printing method, electrostatic printing method, and ink-jet printing method. Furthermore, because the base solid ink layer covers the entire surface of the primary film layer 2, it can also be formed by various coating methods, such as roll coating, knife coating, micro gravure coating, and die coating. A method may be individually selected from these printing and coating methods for each layer; however, it is efficient to select the same method for all the layers to carry out collective processing.

The thickness of the pattern layer 3 is preferably 3 μm or greater and 20 μm or less. When the thickness of the pattern layer 3 is within this range, printing can be made clearer, printing workability is improved when the decorative sheet 1 is produced, and production costs can be reduced.

(Transparent resin layer 4)

The resin material used as the main component of the transparent resin layer 4 is preferably made of olefin-based resin, and may be, besides polypropylene, polyethylene, polybutene, and the like, a homopolymer or a copolymer of one or more of α-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, etc.), and a copolymer of ethylene or an α-olefin with another monomer, for example, an ethylene-vinyl acetate copolymer, ethylene-vinyl alcohol copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, ethylene-butyl acrylate copolymer, and the like. Further, in order to improve the surface hardness of the decorative sheet 1, highly crystalline polypropylene is preferably used.

In the present specification, the main component refers to a component contained in an amount of 90 mass% or greater of the target material, unless otherwise specified.

When the transparent resin layer 4 is provided, the layer thickness of the transparent resin layer 4 is preferably 50 μm or greater and 100 μm or less. If the layer thickness is less than 50 μm, the effect of improving the scratch resistance of the surface of the transparent resin layer 4 is low, and the meaning of providing the transparent resin layer 4 is reduced. If the layer thickness of the transparent resin layer 4 exceeds 100 μm, the decorative sheet 1 is too rigid, which may cause problems, such as blushing and cracking, in bending process.

When a surface protective layer 6 is provided on the transparent resin layer 4, the layer thickness of the transparent resin layer 4 may be less than 50 μm.

Furthermore, the resin composition constituting the transparent resin layer 4 may contain various functional additives such as thermal stabilizer, photostabilizer, blocking agent, catalyst scavenger, coloring agent, light scattering agent, and matting agent, as necessary. These various functional additives can be suitably selected from known additives.

The adhesive used to closely attach the pattern layer 3 and the transparent resin layer 4 may be made of arbitrary material, and may be laminated by heat lamination, extrusion lamination, dry lamination, or the like. The adhesive may be appropriately selected from acrylic, polyester, and polyurethane-based materials, and the like. Generally, two-component curable urethane-based materials that utilize the reaction between isocyanates and polyols are preferred because of their cohesive strength. Although the method for laminating the transparent resin layer 4 is also not particularly limited, common methods are a method using thermal pressure, an extrusion lamination method, a dry lamination method, and the like. The embossed pattern 4a can be made by, for example, a method of embossing by heat and pressure afterwards on a sheet once laminated by various methods, or a method of providing an irregular pattern on cooling rolls and embossing at the same time as extrusion lamination.

In addition, the pattern layer 3, which is embossed at the same time as extrusion, and the transparent resin layer 4 can be bonded together by heat or dry lamination.

When additional laminate strength is required by an extrusion lamination method, an adhesive resin layer 4b may be provided between the transparent resin layer 4 and the adhesive. When the adhesive resin layer 4b is provided, the transparent resin layer 4 and the adhesive resin layer 4b are laminated by coextrusion. The adhesive resin layer 4b is made of a resin, such as polypropylene, polyethylene, or acrylic, modified with acid. The thickness of the adhesive resin layer 4b is preferably 2 μm or greater for the purpose of improving adhesion.

(Transparent ridged layer 5)

The transparent ridged layer 5 has a core part 5A and ridge parts 5B protruding in a ridged shape from one surface of the core part 5A, as shown in Fig. 3. Due to this, asperities are formed on the transparent ridged layer 5. In the decorative sheet 1 according to an embodiment of the present invention, the term "ridged" refers to shapes of narrow and long projections that continue linearly in plan view. The ridge parts 5B may be curved or straight in plan view, but are preferably curved, from the viewpoint of the fingerprint resistance of the decorative sheet 1. In the present embodiment, the ridge parts 5B refer to, for example, portions from the lowest point to the highest point of the asperities of the transparent ridged layer 5, and the core part 5A refers to a portion of the transparent ridged layer 5 excluding the ridge parts 5B.

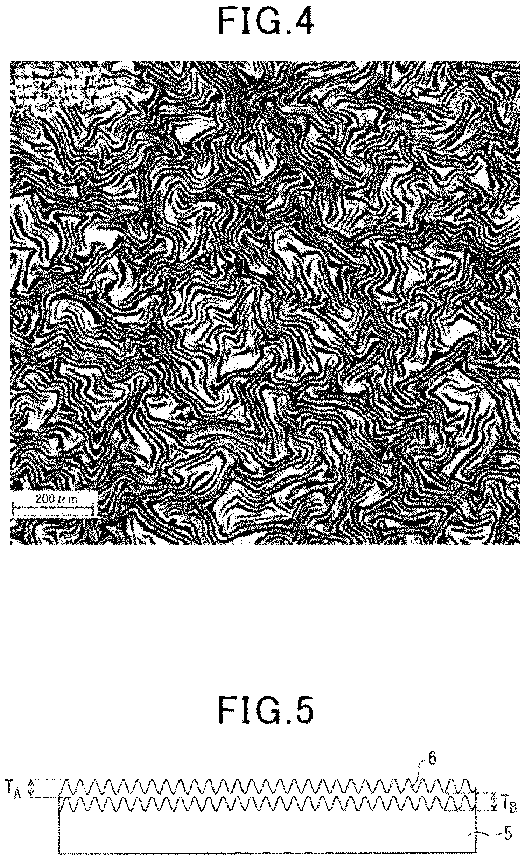

Fig. 3 is a cross-sectional view schematically showing the cross section of the ridge parts 5B (the cross section in the thickness direction of the transparent ridged layer 5) of the transparent ridged layer 5, and Fig. 4 is a two-dimensional image showing the configuration of the surface of the transparent ridged layer 5. Fig. 4 is a two-dimensional image obtained using a laser microscope (OLS-4000, manufactured by Olympus Corporation).

As shown in the two-dimensional image of Fig. 4, the ridge parts 5B are narrow and long projections that continue linearly in plan view. The ridge parts 5B are formed by irradiating the surface of an ionizing radiation curable resin with light of a specific wavelength to shrink the surface of the ionizing radiation curable resin, as described later.

The shape of the ridge parts 5B can be expressed by a ratio RSm/Ra between the surface roughness index RSm ($\mu$m) in the horizontal direction (the planar direction of the transparent ridged layer 5, and the lateral direction in Fig. 3) and the surface roughness index Ra ($\mu$m) in the vertical direction (the depth direction of the ridge parts 5B, the thickness direction of the transparent ridged layer 5, and the longitudinal direction in Fig. 3), and RSm/Ra is preferably 10 or greater and 300 or less. RSm/Ra is more preferably 10 or greater and 250 or less. If RSm/Ra is less than 10, the shape of the ridge parts 5B is too fine, which makes it difficult to wipe off stains, resulting in poor stain resistance. If RSm/Ra is greater than 300, the spacing of the ridges is too wide to obtain low gloss.

The surface roughness indexes Ra and RSm are values measured using a line roughness meter according to JIS B 0601.

The cross-sectional shape of the ridge parts 5B in the thickness direction of the transparent ridged layer 5 may be a sine wave shape. The sine wave shape refers to a shape that can be represented by a sinusoidal line from the lowest position to the highest position of the ridge parts 5B.

The mechanism by which the ridge parts 5B are formed will be described below.

When an acrylate resin is irradiated with light at 200 nm or less, the acrylate resin can be self-excited. Therefore, it is possible to crosslink an acrylate resin by irradiating the acrylate resin with light at 200 nm or less. In the acrylate resin, light at 200 nm or less reaches depths of several tens to hundreds of nanometers. Therefore, only the surface is crosslinked, and the area under the crosslinked surface is fluid, resulting in a wavy fine asperities that resemble folded wrinkles.

Light at 200 nm or less is absorbed by oxygen in the air to be significantly attenuated. Therefore, when the acrylate resin is treated, it is necessary to introduce nitrogen gas to control the reaction atmosphere. The residual oxygen concentration in the reaction atmosphere is preferably suppressed to 2,000 ppm or less. More preferably, the residual oxygen concentration in the reaction atmosphere is 1,000 ppm or less.

In order to form asperities with light at 200 nm or less, the integrated light intensity is preferably 0.1 mJ/cm$^2$ or greater and 200 mJ/cm$^2$ or less. More preferably, the integrated light intensity is 0.5 mJ/cm$^2$ or greater and 100 mJ/cm$^2$ or less. If the integrated light intensity is less than 0.1 mJ/cm$^2$, the curing shrinkage reaction is weak, and asperities are not sufficiently formed; thus, gloss is not reduced. If the integrated light intensity is greater than 200 mJ/cm$^2$, the curing shrinkage reaction becomes too strong, causing the surface condition to deteriorate.

Light at 200 nm or less can be extracted from excimer VUV light. The excimer VUV light can be produced from a noble gas or noble gas halide compound lamp. When high-energy electrons are externally applied to a lamp containing a noble gas or noble gas halide compound gas, a large quantity of discharge plasma (dielectric barrier discharge) is generated. This plasma discharge excites the atoms of the discharge gas (noble gas) and instantaneously turns them into an excimer state. When the excimer state returns to the ground state, light in the excimer-specific wavelength region is emitted.

The gas used in the excimer lamp may be any conventionally used gas as long as it emits light at 200 nm or less. The gas used can be a noble gas, such as Xe, Ar, or Kr, or a mixed gas of noble gas and halogen, such as ArBr or ArF. Excimer lamps vary in central wavelength depending on the gas, and have a wavelength of, for example, about 172 nm (Xe), about 126 nm (Ar), about 146 nm (Kr), about 165 nm (ArBr), or about 193 nm (ArF).

However, considering the magnitude of the photon energy obtained, and the difference between the wavelength and the binding energy of the organic material, it is preferable to use, as the light source, a xenon lamp that emits excimer light with a central wavelength of 172 nm. Further, considering the cost of equipment maintenance, the availability of materials, etc. as well, it is preferable to use a xenon lamp as the light source.

Since light at 200 nm or less only reaches depths of tens to hundreds of nm from the top surface in the acrylate resin, the inside of the transparent ridged layer 5, which has the ridge parts 5B formed by irradiation with light of 200 nm or less, is fluid, and the curing reaction must proceed further. After irradiation with light at 200 nm or less, the transparent ridged layer 5 can be cured by using ionizing radiation or UV light.

The ridge parts 5B formed by irradiation with light of 200 nm or less have a finer structure than the asperities formed on the surface of the transparent ridged layer 5 by mechanical processing, such as embossing. Because such fine asperities are formed on the surface of the transparent ridged layer 5, it is possible to improve fingerprint resistance while maintaining the matte texture of the surface of the decorative sheet 1.

The layer thickness of the transparent ridged layer 5 is preferably within the range of 2 $\mu$m or greater and 20 $\mu$m or less. More preferably, the layer thickness of the transparent ridged layer 5 is within the range of 5 $\mu$m or greater and 20 $\mu$m or less. If the layer thickness of the transparent ridged layer 5 is less than 2 $\mu$m, vacuum ultraviolet light does not penetrate deeply, and low gloss cannot be achieved. If the layer thickness of the transparent ridged layer 5 is thicker than 20 $\mu$m, processability is reduced and blushing occurs during bending.

The transparent ridged layer 5 can be formed, for example, by various printing methods, such as a gravure printing method, offset printing method, screen printing method, electrostatic printing method, and ink-jet printing method. Furthermore, because the transparent ridged layer 5 covers the entire surface on the front side of the primary film layer 2, it can also be formed by various coating methods, such as roll coating, knife coating, micro gravure coating, and die coating. A method may be individually selected from these printing and coating methods for each layer, or the same method may be selected for all the layers to carry out collective processing.

The pattern layer 3 and the transparent ridged layer 5 may be synchronized with each other, from the viewpoint of designability. In the case of synchronizing these layers, after the pattern layer 3 is formed, it is necessary to collectively form the transparent ridged layer 5, and it is thus preferable to use a gravure printing method. Further, a gravure printing method is preferable because of its relatively high speed and cost advantage. Synchronization means that 50% or greater, preferably 70% or greater, and most preferably 90% or greater, of the area where the transparent ridged layer 5 is formed overlaps with the picture area of the pattern layer 3 in plan view.

In order to adjust the thickness of the transparent ridged layer 5, the application amount may be controlled when performing the above printing method or coating method. **In** each printing method or coating method, the application amount can be calculated by producing a product in which a transparent ridged layer is formed on the substrate (primary film layer), and a product in which a transparent ridged layer is not formed, and then calculating a mass difference.

The main material of the transparent ridged layer 5 is an ionizing radiation curable resin. The main material refers to a material that is contained in an amount of 60 parts by mass or greater, more preferably 70 parts by mass or greater, and most preferably 80 parts by mass or greater, relative to 100 parts by mass of the transparent ridged layer 5. As the ionizing radiation curable resin that forms the transparent ridged layer 5, known resins, such as various monomers and commercially available oligomers, can be used. For example, (meth)acrylic resins, silicone-based resins, polyester-based resins, urethane-based resins, amide-based resins, and epoxy-based resins can be used. The ionizing radiation curable resin may be either an aqueous resin or a non-aqueous (organic solvent-based) resin, and such resins may be used singly or in combination of two or more.

The main component of the ionizing radiation curable resin that forms the transparent ridged layer 5 can be a trifunctional acrylate resin (acrylic resin) having a repeating structure. Usable examples of the trifunctional acrylate resin include trimethylolpropane triacrylate, glycerol triacrylate, isocyanurate triacrylate, pentaerythritol triacrylate, and the like. The main component refers to a component that is contained in an amount of 60 parts by mass or greater, more preferably 70 parts by mass or greater, and most preferably 80 parts by mass or greater, relative to 100 parts by mass of the constituent resin components. When a gravure printing method is used as the coating method, the viscosity of the ionizing radiation curable resin is optimally within the range of 10 to 500 mPa·s. Therefore, it is possible and preferable to use trimethylolpropane triacrylate or glycerol triacrylate as the trifunctional acrylate resin because the viscosity can be within the optimal range. Resins with a skeleton that induces hydrogen bonding or $\pi$-$\pi$ stacking are often not preferable because their viscosity is as high as 500 mPa·s or greater. Further, in order to adjust the viscosity, an organic solvent or a low-viscosity bifunctional acrylate resin can be added. However, it is preferable not to use an organic solvent, from the viewpoint of environmental impact. Bifunctional acrylate resins are not preferred because scratch resistance decreases if they are added in large amounts. Therefore, the amount of the bifunctional acrylate resin added is preferably within the range of 10 mass% or greater and 30 mass% or less of the content (mass) of the trifunctional acrylate resin.

The repeating structure of the trifunctional acrylate resin is any of an ethylene oxide (EO) structure, a propylene oxide (PO) structure, and a $\varepsilon$-caprolactone (CL) structure. More preferably, the repeating structure is ethylene oxide or propylene oxide. The ethylene oxide structure, propylene oxide structure, and $\varepsilon$-caprolactone structure are preferable because the molecules are freely rotatable and highly flexible, so that the molecules are easily folded by light at 200 nm or less, and fine asperities can be easily formed. The number of repetitions of the repeating structure is 3 or more. More preferably, the number of repetitions is 3 or more and 30 or less, and most preferably 3 or more and 20 or less. If the number of repetitions is 2 or less, when vacuum ultraviolet light (VUV light) is applied, the ionizing radiation curable resin that forms the transparent ridged layer 5 does not shrink sufficiently, and the transparent ridged layer 5 does not become low gloss. If the number of repetitions is larger than 30, the crosslinking density is reduced, and the scratch resistance of the transparent ridged layer 5 is deteriorated.

The number of repetitions of the repeating structure can be analyzed by using MALDI-TOF-MS analysis. The ionizing radiation curable resin may have a molecular weight distribution. If the ionizing radiation curable resin has a molecular weight distribution, the number of repetitions corresponds to the molecular weight that has the most intense peak in the mass spectrum of the MALDI-TOF-MS analysis.

The main component of the ionizing radiation curable resin that forms the transparent ridged layer 5 can be a tetrafunctional acrylate resin having a repeating structure. Usable examples of the tetrafunctional acrylate resins include pentaerythritol tetraacrylate and the like. The main component refers to a component that is contained in an amount of 60 parts by mass or greater, more preferably 70 parts by mass or greater, and most preferably 80 parts by mass or greater, relative to 100 parts by mass of the constituent resin components. When a gravure printing method is used as the coating method, the viscosity of the ionizing radiation curable resin is optimally within the range of 10 to 500 mPa·s. In order to adjust the viscosity, an organic solvent or a low-viscosity bifunctional acrylate resin can be added. However, it is preferable not to use an organic solvent, from the viewpoint of environmental impact. Bifunctional acrylate resins are not preferred because scratch resistance decreases if they are added in large amounts. Therefore, the amount of the bifunctional acrylate resin is preferably within the range of 10 mass% or greater and 30 mass% or less of the content (mass) of the tetrafunctional acrylate resin.

The repeating structure of the tetrafunctional acrylate resin is preferably any of an ethylene oxide structure, a propylene oxide structure, and a ε-caprolactone structure. More preferably, the repeating structure is ethylene oxide or propylene oxide. The ethylene oxide structure, propylene oxide structure, and ε-caprolactone structure are preferable because the molecules are freely rotatable and highly flexible, so that the molecules are easily folded by light at 200 nm or less, and fine asperities can be easily formed. The number of repetitions of the repeating structure is 12 or more. More preferably, the number of repetitions is 12 or more and 50 or less, and most preferably 20 or more and 50 or less. If the number of repetitions is 11 or less, when vacuum ultraviolet light (VUV light) is applied, the ionizing radiation curable resin that forms the transparent ridged layer 5 does not shrink sufficiently, and the transparent ridged layer 5 does not become low gloss. If the number of repetitions is larger than 50, the crosslinking density is reduced, and the scratch resistance of the transparent ridged layer 5 is deteriorated.

The main component of the ionizing radiation curable resin that forms the transparent ridged layer 5 can be an acrylate resin (acrylic resin) having a dipentaerythritol skeleton having a repeating structure. Since the acrylate resin has a dipentaerythritol skeleton, the degree of crosslinking of the acrylate resin is increased, and a three-dimensional structure can be easily obtained. As a result, the strength of the transparent ridged layer 5 can be improved.

As the acrylate resin having a dipentaerythritol skeleton, for example, dipentaerythritol pentaacrylate or dipentaerythritol hexaacrylate can be used. The main component refers to a component that is contained in an amount of 60 parts by mass or greater, more preferably 70 parts by mass or greater, and most preferably 80 parts by mass or greater, relative to 100 parts by mass of the constituent resin components.

The acrylic resin having a dipentaerythritol skeleton is preferably pentafunctional or hexafunctional. More specifically, the number of acryloyl groups in the dipentaerythritol skeleton is preferably 5 or 6. In the case of a tetrafunctional or less functional resin, the degree of crosslinking decreases and scratch resistance decreases, which is not preferable. That is, if the number of acryloyl groups in the dipentaerythritol skeleton is 4 or fewer, the degree of crosslinking of the acrylate resin (acrylic resin) decreases and scratch resistance decreases, which is not preferable.

When a gravure printing method is used as the coating method, the viscosity of the ionizing radiation curable resin is optimally within the range of 10 to 500 mPa·s. In order to adjust the viscosity, an organic solvent or a low-viscosity bifunctional to tetrafunctional acrylate resin can be added. However, it is preferable not to use an organic solvent, from the viewpoint of environmental impact. Bifunctional to tetrafunctional acrylate resins are not preferred because scratch resistance decreases if they are added in large amounts. Therefore, the content of the bifunctional to tetrafunctional acrylate resin is preferably within the range of 10 mass% or greater and 30 mass% or less, and more preferably within the range of 15 mass% or greater and 25 mass% or less, relative to the content (mass) of the acrylate resin having a dipentaerythritol skeleton. The bifunctional to tetrafunctional acrylate resin refers to an acrylate resin having 2 to 4 acryloyl groups.

The repeating structure of the acrylate resin having a dipentaerythritol skeleton is any of an ethylene oxide (EO) structure, a propylene oxide (PO) structure, and a ε-caprolactone (CL) structure. More preferably, the repeating structure is ethylene oxide or propylene oxide. The ethylene oxide structure, propylene oxide structure, and ε-caprolactone structure are preferable because the molecules are freely rotatable and highly flexible, so that the molecules are easily folded by light at 200 nm or less, and fine asperities can be easily formed. The number of repetitions of the repeating structure is 12 or more. More preferably, the number of repetitions is 12 or more and 50 or less, and most preferably 16 or more and 50 or less. If the number of repetitions is 11 or less, when vacuum ultraviolet light (VUV light) is applied, the ionizing radiation curable resin that forms the transparent ridged layer 5 does not shrink sufficiently, and the transparent ridged layer 5 does not become low gloss. If the number of repetitions is larger than 50, the crosslinking density is reduced, and the scratch resistance of the transparent ridged layer 5 is deteriorated.

The transparent ridged layer 5 may contain particles. By adding particles with an optimal particle size and an optimal content, a uniform surface can be formed. Usable examples of the particles include organic materials, such as PE wax, PP wax, and resin beads, or inorganic materials, such as silica, glass, alumina, titania, zirconia, calcium carbonate, and barium sulfate. The average particle size (D50) of the particles is preferably 10 $\mu$m or less. The average particle size is more preferably 1 $\mu$m or greater and 8 $\mu$m or less. If the average particle size is greater than 10 $\mu$m, the particles become detached, causing a decrease in scratch resistance, which is not preferable. If the average particle size is less than 1 $\mu$m, the effect on surface uniformity is insufficient, which is not preferable. The amount of particles added is preferably 0.5 parts by mass or greater and 10 parts by mass or less relative to 100 parts by mass of the ionizing radiation curable resin. More preferably, the amount of particles added is 2 parts by mass or greater and 8 parts by mass or less. The transparent ridged layer 5 can preferably form a uniform surface condition by containing particles in the above amount.

When the entire transparent ridged layer 5 is cured with UV light, it is necessary to add a photoinitiator to the transparent ridged layer 5. Examples of the photoinitiator include, but are not particularly limited to, benzophenone-based, acetophenone-based, benzoin ether-based, and thioxanthone-based photoinitiators.

In order to impart required functions, functional additives, such as an antimicrobial agent and an antifungal agent, may be added to the transparent ridged layer 5. In addition, an ultraviolet absorber and a photostabilizer may also be added, as necessary. It is common to add any combination of the ultraviolet absorber, such as benzotriazole, benzoate, benzophenone, or triazine-based absorber, and the photostabilizer, such as hindered amine-based photostabilizer.

Examples of the hindered amine-based photostabilizer include bis(1,2,2,6,6-pentamethyl-4-piperidyl)[[3,5-bis(1,1-dimethylethyl)-4-hydroxyphenyl]methyl]butylmalonate (a typical example is "TINUVIN 144" manufactured by BASF Corporation), "TINUVIN 123" manufactured by BASF Corporation, decanedioic acid bis(2,2,6,6-tetramethyl-1-(octyloxy)-4-piperidinyl)ester, and reaction products with (1,1-dimethylethyl hydroperoxide) and octane.

When a hindered amine-based photostabilizer is added to the transparent ridged layer 5, it is preferable to add the hindered amine-based photostabilizer in an amount of 0.05 parts by mass or greater and 5 parts by mass or less relative to 100 parts by mass of the constituent ionizing radiation curable resin. More preferably, the amount is in the range of 0.2 parts by mass or greater and 3 parts by mass or less. When the amount of the hindered amine-based photostabilizer added is less than 0.05 parts by mass, the stability of the resin to ultraviolet radiation may be poor. On the other hand, an amount greater than 5 parts by mass may cause bleed out.

Moreover, the transparent ridged layer 5 is irradiated with light at 200 nm or less to shrink and cure near the surface to form fine asperities; however, if the hindered amine-based photostabilizer is contained in an amount of 3 parts by mass or greater, curing near the surface is inhibited. In order to achieve both low gloss and weather resistance, it is preferred that the hindered amine-based photostabilizer is contained in an amount of 3 parts by mass or less.

(Surface protective layer 6)

In order to further improve scratch resistance and weather resistance, a surface protective layer 6 can be provided on the surface of the transparent ridged layer 5. The layer thickness of the surface protective layer 6 is preferably within the range of 2 $\mu$m or greater and 20 $\mu$m or less. More preferably, the layer thickness of the surface protective layer 6 is within the range of 5 $\mu$m or greater and 20 $\mu$m or less. If the layer thickness of the surface protective layer 6 is less than 2 $\mu$m, scratch resistance and weather resistance cannot be improved. If the layer thickness of the surface protective layer 6 is thicker than 20 $\mu$m, processability is reduced and blushing occurs during bending. The film thickness of the surface protective layer 6 refers to an average value (TA+TB)/2 of the film thickness TA of the surface protective layer on the highest portion of the ridge parts 5B of the transparent ridged layer 5 and the film thickness of the surface protective layer 6 on the recessed portion of the transparent ridged layer 5, i.e., the film thickness TB of the surface protective layer on the core part 5A of the transparent ridged layer 5.

The surface protective layer 6 can be formed, for example, by various printing methods, such as a gravure printing method, offset printing method, screen printing method, electrostatic printing method, and ink-jet printing method. Furthermore, because the surface protective layer 6 covers the entire surface on the front side of the transparent ridged layer 5, it can also be formed by various coating methods, such as roll coating, knife coating, micro gravure coating, and die coating. A method may be individually selected from these printing and coating methods for each layer, or the same method may be selected for all the layers to carry out collective processing.

As shown in Fig. 5, the surface protective layer 6 is formed continuously on the transparent ridged layer 5 so as not to impair the asperities and so as to cover the entire surface of the transparent ridged layer 5 on which the ridge parts 5B are formed. The film thickness of the surface protective layer 6 on the raised portion of the transparent ridged layer 5, i.e., the film thickness TA of the surface protective layer on the highest portion of the ridge parts 5B of the transparent ridged layer 5, and the film thickness of the surface protective layer 6 on the recessed portion of the transparent ridged layer 5, i.e., the film thickness TB of the surface protective layer on the core part 5A of the transparent ridged layer 5, preferably satisfy $0.1 \leq TA/TB \leq 2.0$. If TA/TB is less than 0.1, the asperities of the transparent ridged layer 5 disappear due to the surface protective layer 6, and desired low gloss cannot be achieved. If TA/TB is more than 2.0, it is difficult to form the surface protective layer 6 uniformly on the transparent ridged layer 5 without impairing the asperities, and scratch resistance and weather resistance cannot be ensured for the uneven parts.

The relationship between the film thickness TA of the surface protective layer 6 on the raised portion of the transparent ridged layer 5, and the film thickness TB of the surface protective layer 6 on the recessed portion of the transparent ridged layer 5 preferably satisfies $1.0 \leq TA/TB \leq 1.9$. By making the film thickness on the raised portion of the transparent ridged layer 5 and the film thickness on the recessed portion substantially identical, a surface protective layer 6 with a uniform film thickness can be formed, and scratch resistance and weather resistance can be significantly improved. In particular, when the relationship between the film thickness TA and the film thickness TB is $TA/TB<1$, the surface protective layer 6 is formed in the direction in which the asperities of the decorative sheet 1 disappear. In contrast, when the relationship is $1.0 \leq TA/TB$, the surface protective layer 6 is formed in the direction in which the asperities of the decorative sheet 1 expand. Therefore, texture can be imparted when $1.0 \leq TA/TB$ is satisfied. When $1.0 \leq TA/TB$ is satisfied, the film thickness of the entire decorative sheet 1 increases as TA/TB increases, which leads to cost increases. Therefore, by satisfying $1.0 \leq TA/TB \leq 1.9$, texture can be imparted while suppressing cost increases.

The surface protective layer 6 formed in this manner reflects the asperities of the transparent ridged layer 5. That is, the ratio RSm/Ra between the surface roughness index RSm ($\mu$m) in the horizontal direction (the planar direction of the surface protective layer 6, and the lateral direction in Fig. 5) of the surface protective layer 6 and the surface roughness index Ra ($\mu$m) in the vertical direction (the thickness direction of the surface protective layer 6, and the longitudinal direction in Fig. 5), is preferably 10 or greater and 300 or less. RSm/Ra is more preferably 10 or greater and 250 or less. If RSm/Ra is less than 10, the shape of the ridge parts is too fine, which makes it difficult to wipe off stains, resulting in poor stain resistance. If RSm/Ra is greater than 300, the spacing of the ridges is too wide to obtain low gloss.

The resin materials for the main component of the surface protective layer 6 may be selected as appropriate from polyurethane, acrylic silicone, fluorine, epoxy, vinyl, polyester, melamine, aminoalkyd, and urea-based resin materials and the like. The form of the resin materials is not limited, and may be, for example, an aqueous, emulsion, or solvent type. The curing method may be appropriately selected from a one-part type, a two-part type, an ultraviolet curing method, and the like.

The resin materials used as the main component of the surface protective layer 6 preferably include urethane-based ones having isocyanate in view of workability, cost, cohesive force of the resin itself, and the like. The isocyanate may be appropriately selected from adduct, biuret, and isocyanurate curing agents, which are derivatives of tolylene diisocyanate (TDI), xylylene diisocyanate (XDI), hexamethylene diisocyanate (HMDI), diphenylmethane diisocyanate (MDI), lysine diisocyanate (LDI), isophorone diisocyanate (IPDI), bis (isocyanatomethyl) cyclohexane (HXDI), trimethylhexamethylene diisocyanate (TMDI), and the like. In view of weather resistance, curing agents based on hexamethylene diisocyanate (HMDI) or isophorone diisocyanate (IPDI) having a linear molecular structure are preferred. In addition, in order to improve surface hardness, resins curable with ionizing radiation, such as ultraviolet and electron beams, are preferably used. Moreover, these resins may be used in combination. For example, use of a hybrid of thermally curable resin and a photo-curable resin can improve surface hardness, reduce cure shrinkage, and enhance adhesion.

Furthermore, in order to impart various functions, functional additives, such as a matting agent, an antimicrobial agent, and an antifungal agent, may be added to the surface protective layer 6. An ultraviolet absorber or a light stabilizer may be added to the layers, if necessary. The ultraviolet absorber may be a benzotriazole-, benzoate-, benzophenone-, triazine- or cyanoacrylate-based ultraviolet absorber. Moreover, usable examples of light stabilizers include hindered amine-based light stabilizers.

(Primer layer 7)

As the material of the primer layer 7, basically the same material as that of the pattern layer 3 can be used; however, considering that the primer layer 7 is applied on the rear surface of the decorative sheet 1 and wound up in web, an inorganic filler such as silica, alumina, magnesia, titanium oxide, or barium sulfate may be added to the primer layer 7 to prevent blocking and improve adhesion to the adhesive. Since the aim is to secure the adhesion to the substrate B, the coating thickness of the primer layer 7 is preferably 0.1 $\mu$m or greater and 3.0 $\mu$m or less. The primer layer 7 is necessary when the primary film layer 2 is an olefin-based material with an inert surface; however, when the surface is active, the primer layer 7 is not particularly necessary.

<Production method>

An example of the method for producing the decorative sheet 1 will be described.

A resin film is used as a primary film layer 2, and a transparent ridged layer 5 is formed by printing on the top of the primary film layer 2. The surface of an ionizing radiation curable resin applied to the transparent ridged layer 5 is irradiated with light at 200 nm or less to shrink the surface of the ionizing radiation curable resin. Subsequently, in order to cure the shrunk ionizing radiation curable resin, ionizing radiation or UV light is applied. The above procedure forms a transparent ridged layer 5 having a core part 5A and ridge parts 5B protruding in a ridged shape from one surface (top) of the core part 5A.

Further, if necessary, a surface protective layer 6 is formed by printing on the top of the transparent ridged layer 5. In this case, the viscosity of the resin forming the surface protective layer 6 is controlled, and a decorative sheet 1 is formed by a known printing method, in which the relationship between the film thickness TA of the surface protective layer 6 on the raised portion of the transparent ridged layer 5 and the film thickness TB of the surface protective layer 6 on the recessed portion of the transparent ridged layer 5 satisfies $0.1 \leq TA/TB \leq 2.0$.

<Advantageous effects and others>

(1) The decorative sheet 1 of the present embodiment includes a transparent ridged layer 5 on which asperities are formed, and a surface protective layer 6 in which the relationship between a film thickness TA on a raised portion of the transparent ridged layer 5 and a film thickness TB on a recessed portion of the transparent ridged layer 5 satisfies $0.1 \leq TA/TB \leq 2.0$.

With this configuration, the gloss (glossiness) of the decorative sheet 1 can be adjusted, even if the surface protective layer 6 does not contain a matting agent (matting additive). Since the matting agent reduces the oil repellency of a layer formed from a resin material, fingerprints are likely to stick to a surface protective layer containing the matting agent.

Since the surface protective layer 6 according to the present embodiment does not contain a matting agent, it does not absorb oil, and oil repellency is relatively improved. For this reason, during site construction or furniture assembly, and in various situations in the daily lives of residents, fingerprints are less likely to adhere to the decorative sheet 1 having the surface protective layer 6. Further, it is possible to prevent oil stains on the surface and adsorption of pollutants. Moreover, since a matting agent is not contained, the particles of the matting agent are not detached when the surface of the decorative sheet 1 is scratched, and it is possible for the gloss of the surface of the decorative sheet 1 to resist changes, or for scratches to occur.

(2) The decorative sheet 1 of the present embodiment includes a transparent ridged layer 5 on which asperities are formed, and a surface protective layer 6 in which the relationship between a film thickness TA on a raised portion of the transparent ridged layer 5 and a film thickness TB on a recessed portion of the transparent ridged layer satisfies $1.0 \leq TA/TB \leq 1.9$.

With this configuration, fingerprints are less likely to stick more reliably, and stain resistance and scratch resistance are also improved.

(3) In the decorative sheet 1 of the present embodiment, it is preferable that one or both of the transparent ridged layer and the surface protective layer contain a hindered amine-based photostabilizer.

With this configuration, weather resistance can also be improved.

(4) The decorative sheet 1 of the present embodiment includes a transparent ridged layer 5 on which asperities are formed, and a hindered amine-based photostabilizer is contained in an amount within the range of 0.05 parts by mass or greater and 5 parts by mass or less relative to 100 parts by mass of the resin contained in the transparent ridged layer 5.

With this configuration, the photostabilizer does not bleed out, and stable weather resistance can be obtained.

(5) The decorative sheet 1 of the present embodiment includes a transparent ridged layer 5 on which asperities are formed, and a hindered amine-based photostabilizer is contained in an amount within the range of 0.2 parts by mass or greater and 3 parts by mass or less relative to 100 parts by mass of the resin contained in the transparent ridged layer 5.

With this configuration, a decorative sheet 1 that has both asperities and weather resistance can be obtained.

[Examples]

Specific examples of the decorative sheet 1 of the present invention will be described below.

[Examples]

<Example 1>

An olefin film with a thickness of 55 $\mu$m (manufactured by Riken Technos Corporation) was used as a primary film layer. One surface of the primary film layer was subjected to corona treatment, and the following transparent ridged layer coating liquid was applied to the other surface. The layer thickness of the transparent ridged layer coating liquid was 5 $\mu$m. Thereafter, the surface of the transparent ridged layer coating liquid was irradiated with excimer VUV light at a wavelength of 172 nm to shrink the surface. Subsequently, ionizing radiation was applied to form a transparent ridged layer 5, thereby obtaining a decorative sheet with a total thickness of 60 μm of Example 1.

(Transparent ridged layer coating liquid)

The transparent ridged layer coating liquid was composed by combining the following ionizing radiation curable resin with the following additives (particles, photostabilizer, and ultraviolet absorber).

- Ionizing radiation curable resin

Type: trimethylolpropane EO-modified triacrylate (EO 6 mol added)

Product name: Miramer M3160 (manufactured by Miwon)

Compounding amount: 100 parts by mass

- Particles

Product name: SYLYSIA 250N (manufactured by Fuji Silysia Chemical Ltd.)

Particle size: 5 μm

Compounding amount: 0.5 parts by mass

- Photostabilizer

Product name: Tinuvin 123 (manufactured by BASF Corporation)

Compounding amount: 3 parts by mass

- Ultraviolet absorber

Product name: Tinuvin 329 (manufactured by BASF Corporation)

Compounding amount: 2.5 parts by mass

<Example 2>

A decorative sheet of Example 2 was obtained in the same manner as in Example 1, except that the ionizing radiation curable resin of Example 1 was replaced with the following resin.

- Ionizing radiation curable resin

Type: trimethylolpropane EO-modified triacrylate (EO 15 mol added)

Product name: SR9035 (manufactured by Sartomer)

<Example 3>

A decorative sheet of Example 3 was obtained in the same manner as in Example 1, except that the ionizing radiation curable resin of Example 1 was replaced with the following resin.

- Ionizing radiation curable resin

Type: trimethylolpropane EO-modified triacrylate (EO3 mol added)

Product name: Miramer M3130 (manufactured by Miwon)

<Example 4>

A decorative sheet of Example 4 was obtained in the same manner as in Example 1, except that the ionizing radiation curable resin of Example 1 was replaced with the following resin.

- Ionizing radiation curable resin

Type: trimethylolpropane PO-modified triacrylate (PO 6 mol added)

Product name: NK Ester A-TMPT-6PO (manufactured by Shin-Nakamura Chemical Co., Ltd.)

<Example 5>

A decorative sheet of Example 5 was obtained in the same manner as in Example 1, except that the ionizing radiation curable resin of Example 1 was replaced with the following resin.

- Ionizing radiation curable resin

Type: caprolactone-modified tris(2-acryloxyethyl)isocyanurate (caprolactone 3 mol added)

Product name: NK Ester A-9300-3CL (manufactured by Shin-Nakamura Chemical Co., Ltd.)

<Example 6>

A decorative sheet with a total thickness of 56 $\mu$m of Example 6 was obtained in the same manner as in Example 1, except that the layer thickness of the transparent ridged layer coating liquid of Example 1 was set to 1 $\mu$m.

<Example 7>

A decorative sheet with a total thickness of 57 $\mu$m of Example 7 was obtained in the same manner as in Example 1, except that the layer thickness of the transparent ridged layer coating liquid of Example 1 was set to 2 $\mu$m.

<Example 8>

A decorative sheet with a total thickness of 75 $\mu$m of Example 8 was obtained in the same manner as in Example 1, except that the layer thickness of the transparent ridged layer coating liquid of Example 1 was set to 20 $\mu$m.

<Example 9>

A decorative sheet with a total thickness of 80 $\mu$m of Example 9 was obtained in the same manner as in Example 1, except that the layer thickness of the transparent ridged layer coating liquid of Example 1 was set to 25 $\mu$m.

<Example 10>

A decorative sheet of Example 10 was obtained in the same manner as in Example 1, except that the particles of Example 1 were not compounded.

<Example 11>

A decorative sheet of Example 11 was obtained in the same manner as in Example 1, except that the amount of the photostabilizer compounded in Example 1 was changed to 0.05 parts by mass.

<Example 12>

A decorative sheet of Example 12 was obtained in the same manner as in Example 1, except that the amount of the photostabilizer compounded in Example 1 was changed to 5 parts by mass.

<Example 13>

A decorative sheet of Example 13 was obtained in the same manner as in Example 1, except that the ionizing radiation curable resin of Example 1 was replaced with the following resin.

- Ionizing radiation curable resin

Type: ethoxylated pentaerythritol tetraacrylate (EO 35 mol added)

Product name: NK Ester ATM 35E (manufactured by Shin-Nakamura Chemical Co., Ltd.)

<Example 14>

A decorative sheet of Example 14 was obtained in the same manner as in Example 1, except that the ionizing radiation curable resin of Example 1 was replaced with the following resin.

- Ionizing radiation curable resin

Type: ethoxylated pentaerythritol tetraacrylate (EO 50 mol added)

<Example 15>

A decorative sheet of Example 15 was obtained in the same manner as in Example 1, except that the ionizing radiation curable resin of Example 1 was replaced with the following resin.

- Ionizing radiation curable resin

Type: ethoxylated pentaerythritol tetraacrylate (EO 20 mol added)

<Example 16>

A decorative sheet of Example 16 was obtained in the same manner as in Example 1, except that the ionizing radiation curable resin of Example 1 was replaced with the following resin.

- Ionizing radiation curable resin

Type: ethoxylated pentaerythritol hexaacrylate (EO 30 mol added)

<Example 17>

A decorative sheet of Example 17 was obtained in the same manner as in Example 1, except that the ionizing radiation curable resin of Example 1 was replaced with the following resin.

- Ionizing radiation curable resin

Type: ethoxylated pentaerythritol pentaacrylate (EO 30 mol added)

<Example 18>

A decorative sheet of Example 18 was obtained in the same manner as in Example 1, except that the ionizing radiation curable resin of Example 1 was replaced with the following resin.

- Ionizing radiation curable resin

Type: ethoxylated pentaerythritol hexaacrylate (EO 50 mol added)

<Example 19>

After forming a transparent ridged layer 5 in Example 1, the following surface protective layer coating liquid was applied. The layer thickness of the surface protective layer coating liquid was 5 $\mu$m, and a decorative sheet with a total thickness of 65 $\mu$m of Example 19 was obtained. The relational expression TA/TB between the film thickness TA on the raised portion and the film thickness TB on the recessed portion of the transparent ridged layer 5 was 1.2.

(Surface protective layer coating liquid)

The surface protective layer coating liquid was composed by combining a two-component curable urethane resin (W184, manufactured by DIC Graphics Corporation) with the following additives (particles, photostabilizer, and ultraviolet absorber).

- Particles

Product name: SYLYSIA 250N (manufactured by Fuji Silysia Chemical Ltd.)

Particle size: 5 $\mu$m

Compounding amount: 0.5 parts by mass

- Photostabilizer

Product name: Tinuvin 123 (manufactured by BASF Corporation)

Compounding amount: 3 parts by mass

- Ultraviolet absorber

Product name: Tinuvin 329 (manufactured by BASF Corporation)

Compounding amount: 2.5 parts by mass

<Example 20>

A decorative sheet of Example 20 was obtained in the same manner as in Example 19, except that the particles provided in the surface protective layer of Example 19 were not compounded. The relational expression TA/TB between the film thickness TA on the raised portion and the film thickness TB on the recessed portion of the transparent ridged layer 5 was 1.2.

<Example 21>

A decorative sheet of Example 21 was obtained in the same manner as in Example 20, except that the layer thickness of the surface protective layer was changed to 1 $\mu$m from that in Example 20. The relational expression TA/TB between the film thickness TA on the raised portion and the film thickness TB on the recessed portion of the transparent ridged layer 5 was 2.0.

<Example 22>

A decorative sheet of Example 21 was obtained in the same manner as in Example 20, except that the layer thickness of the surface protective layer was changed to 2 $\mu$m from that in Example 20. The relational expression TA/TB between the film thickness TA on the raised portion and the film thickness TB on the recessed portion of the transparent ridged layer 5 was 1.6.

<Example 23>

A decorative sheet of Example 23 was obtained in the same manner as in Example 20, except that the layer thickness of the surface protective layer was changed to 20 $\mu$m from that in Example 20. The relational expression TA/TB between the film thickness TA on the raised portion and the film thickness TB on the recessed portion of the transparent ridged layer 5 was 0.5.

<Example 24>

A decorative sheet of Example 24 was obtained in the same manner as in Example 20, except that the layer thickness of the surface protective layer was changed to 25 $\mu$m from that in Example 20. The relational expression TA/TB between the film thickness TA on the raised portion and the film thickness TB on the recessed portion of the transparent ridged layer 5 was 0.1.

<Example 25>

A transparent ridged layer was formed in the same manner as in Example 1, except that the photostabilizer provided in the transparent ridged layer of Example 1 was not compounded. Thereafter, a surface protective layer was formed in the same manner as in Example 20, except that the photostabilizer provided in the surface protective layer of Example 20 was not compounded, thereby obtaining a decorative sheet of Example 25. The relational expression TA/TB between the film thickness TA on the raised portion and the film thickness TB on the recessed portion of the transparent ridged layer 5 was 1.2.

<Example 26>

A surface protective layer was formed in the same manner as in Example 25, except that the amount of the photostabilizer compounded in the surface protective layer in Example 25 was changed to 1 part by mass, thereby obtaining a decorative sheet of Example 26. The relational expression TA/TB between the film thickness TA on the raised portion and the film thickness TB on the recessed portion of the transparent ridged layer 5 was 1.2.

<Example 27>

A surface protective layer was formed in the same manner as in Example 25, except that the amount of the photostabilizer compounded in the surface protective layer in Example 25 was changed to 5 parts by mass, thereby obtaining a decorative sheet of Example 27. The relational expression TA/TB between the film thickness TA on the raised portion and the film thickness TB on the recessed portion of the transparent ridged layer 5 was 1.2.

<Example 28>

A surface protective layer was formed in the same manner as in Example 25, except that the amount of the photostabilizer compounded in the surface protective layer in Example 25 was changed to 10 parts by mass, thereby obtaining a decorative sheet of Example 28. The relational expression TA/TB between the film thickness TA on the raised portion and the film thickness TB on the recessed portion of the transparent ridged layer 5 was 1.2.

<Example 29>

A transparent ridged layer was formed in the same manner as in Example 27, except that the amount of the photostabilizer compounded in the transparent ridged layer in Example 27 was changed to 0.05 parts by mass, thereby obtaining a decorative sheet of Example 29. The relational expression TA/TB between the film thickness TA on the raised portion and the film thickness TB on the recessed portion of the transparent ridged layer 5 was 1.2.

<Example 30>

A transparent ridged layer was formed in the same manner as in Example 27, except that the amount of the photostabilizer compounded in the transparent ridged layer in Example 27 was changed to 0.2 parts by mass, thereby obtaining a decorative sheet of Example 30. The relational expression TA/TB between the film thickness TA on the raised portion and the film thickness TB on the recessed portion of the transparent ridged layer 5 was 1.2.

<Example 31>

A transparent ridged layer was formed in the same manner as in Example 27, except that the amount of the photostabilizer compounded in the transparent ridged layer in Example 27 was changed to 1 part by mass, thereby obtaining a decorative sheet of Example 31. The relational expression TA/TB between the film thickness TA on the raised portion and the film thickness TB on the recessed portion of the transparent ridged layer 5 was 1.2.

<Example 32>

A transparent ridged layer was formed in the same manner as in Example 27, except that the amount of the photostabilizer compounded in the transparent ridged layer in Example 27 was changed to 3 parts by mass, thereby obtaining a decorative sheet of Example 32. The relational expression TA/TB between the film thickness TA on the raised portion and the film thickness TB on the recessed portion of the transparent ridged layer 5 was 1.2.

<Example 33>

A transparent ridged layer was formed in the same manner as in Example 27, except that the amount of the photostabilizer compounded in the transparent ridged layer in Example 27 was changed to 5 parts by mass, thereby obtaining a decorative sheet of Example 33. The relational expression TA/TB between the film thickness TA on the raised portion and the film thickness TB on the recessed portion of the transparent ridged layer 5 was 1.2.

<Example 34>

Before forming a transparent ridged layer in Example 3, a crystalline polypropylene resin and a polyethylene-based adhesive resin were coextruded using a melt extruder on one surface of the primary film layer after corona treatment to form a transparent resin layer with a thickness of 80 $\mu$m and an adhesive resin layer with a thickness of 10 $\mu$m.
Subsequently, the primary film layer coated with an aromatic ester anchoring agent ("A3210" manufactured by Mitsui Chemicals, Inc.; coating amount: 1 g/m$^2$) as an adhesive layer and the transparent resin layer were bonded together by an extrusion lamination method through the formed adhesive resin layer. The surface of the sheet formed by bonding together on the transparent resin layer side was pressed with a cast roll for embossing to form an irregular pattern (embossed pattern).
Further, a transparent ridged layer was formed on the surface of the transparent resin layer on which the irregular pattern was formed. A decorative sheet of Example 34 was obtained in the same manner as in Example 1, except that the same ionizing radiation curable resin as that of Example 3 was used for the transparent ridged layer.

<Example 35>

A decorative sheet of Example 35 was obtained in the same manner as in Example 34, except that the ionizing radiation curable resin in the transparent ridged layer of Example 34 was replaced with the same resin as that of Example 4.

<Example 36>

A decorative sheet of Example 36 was obtained in the same manner as in Example 34, except that the ionizing radiation curable resin in the transparent ridged layer of Example 34 was replaced with the same resin as that of Example 9.

<Example 37>

After forming a transparent ridged layer in Example 34, the same surface protective layer coating liquid as that of Example 27 was applied. The layer thickness of the surface protective layer coating liquid was 5 $\mu$m, and a decorative sheet with a total thickness of 155 $\mu$m of Example 37 was obtained. The relational expression TA/TB between the film thickness TA on the raised portion and the film thickness TB on the recessed portion of the transparent ridged layer 5 was 1.2.

<Example 38>

After forming a transparent ridged layer in Example 35, the same surface protective layer coating liquid as that of Example 27 was applied. The layer thickness of the surface protective layer coating liquid was 5 $\mu$m, and a decorative sheet with a total thickness of 155 $\mu$m of Example 38 was obtained. The relational expression TA/TB between the film thickness TA on the raised portion and the film thickness TB on the recessed portion of the transparent ridged layer 5 was 1.2.

<Example 39>

After forming a transparent ridged layer in Example 36, the same surface protective layer coating liquid as that of Example 27 was applied. The layer thickness of the surface protective layer coating liquid was 25 $\mu$m, and a decorative sheet with a total thickness of 175 $\mu$m of Example 39 was obtained. The relational expression TA/TB between the film thickness TA on the raised portion and the film thickness TB on the recessed portion of the transparent ridged layer 5 was 1.2.

<Example 40>

After forming a transparent ridged layer 5 in Example 6, a surface protective layer coating liquid was applied. The layer thickness of the surface protective layer coating liquid was 5 $\mu$m, and a decorative sheet with a total thickness of 65 $\mu$m of Example 40 was obtained. The relational expression TA/TB between the film thickness TA on the raised portion and the film thickness TB on the recessed portion of the transparent ridged layer 5 of the surface protective layer coating liquid was 1.2.

As the surface protective layer coating liquid, the following surface protective layer coating liquid, which was the same as that of Example 19, was used.

(Surface protective layer coating liquid)

The surface protective layer coating liquid was composed by combining a two-component curable urethane resin (W184, manufactured by DIC Graphics Corporation) with the following additives (particles, photostabilizer, and ultraviolet absorber).

- Particles

Product name: SYLYSIA 250N (manufactured by Fuji Silysia Chemical Ltd.)

Particle size: 5 $\mu$m

Compounding amount: 0.5 parts by mass

- Photostabilizer

Product name: Tinuvin 123 (manufactured by BASF Corporation)

Compounding amount: 3 parts by mass

- Ultraviolet absorber

Product name: Tinuvin 329 (manufactured by BASF Corporation)
Compounding amount: 2.5 parts by mass

<Example 41>

A decorative sheet with a total thickness of 66 $\mu$m of Example 41 was obtained in the same manner as in Example 1, except that the layer thickness of the transparent ridged layer coating liquid of Example 40 was set to 2 $\mu$m. The relational expression TA/TB between the film thickness TA on the raised portion and the film thickness TB on the recessed portion of the transparent ridged layer 5 of the surface protective layer coating liquid was 1.2.

<Example 42>

A decorative sheet with a total thickness of 85 $\mu$m of Example 40 was obtained in the same manner as in Example 40, except that the layer thickness of the transparent ridged layer coating liquid of Example 40 was set to 20 $\mu$m. The relational expression TA/TB between the film thickness TA on the raised portion and the film thickness TB on the recessed portion of the transparent ridged layer 5 of the surface protective layer coating liquid was 1.2.

<Example 43>

A decorative sheet with a total thickness of 90 $\mu$m of Example 43 was obtained in the same manner as in Example 40, except that the layer thickness of the transparent ridged layer coating liquid of Example 40 was set to 25 $\mu$m.

[Comparative Examples]

<Comparative Example 1>

A decorative sheet of Comparative Example 1 was obtained in the same manner as in Example 1, except that the step of applying excimer VUV light in Example 1 was not performed, and the amount of the particles compounded was changed to 15 parts by mass.

<Comparative Example 2>

A decorative sheet of Comparative Example 2 was obtained in the same manner as in Example 13, except that the step of applying excimer VUV light in Example 13 was not performed, and the amount of the particles compounded was changed to 15 parts by mass.

<Comparative Example 3>

A decorative sheet of Comparative Example 3 was obtained in the same manner as in Example 16, except that the step of applying excimer VUV light in Example 16 was not performed, and the amount of the particles compounded was changed to 15 parts by mass.

<Comparative Example 4>

A decorative sheet of Comparative Example 4 was obtained in the same manner as in Example 1, except that the ionizing radiation curable resin of Example 1 was replaced with the following resin.

- Ionizing radiation curable resin

Type: trimethylolpropane triacrylate

Product name: NK Ester A-TMPT (manufactured by Shin-Nakamura Chemical Co., Ltd.)

<Comparative Example 5>

A decorative sheet of Comparative Example 5 was obtained in the same manner as in Example 1, except that the ionizing radiation curable resin of Example 1 was replaced with the following resin.

- Ionizing radiation curable resin

Type: pentaerythritol tetraacrylate

Product name: NK Ester A-TMMT (manufactured by Shin-Nakamura Chemical Co., Ltd.)

<Comparative Example 6>

A decorative sheet of Comparative Example 6 was obtained in the same manner as in Example 1, except that the ionizing radiation curable resin of Example 1 was replaced with the following resin.

- Ionizing radiation curable resin

Type: dipentaerythritol hexaacrylate

<Comparative Example 7>

A decorative sheet of Comparative Example 7 was obtained in the same manner as in Example 19, except that the excimer VUV light irradiation of Example 19 was not performed, and the amount of the particles compounded was changed to 15 parts by mass. The relational expression TA/TB between the film thickness TA on the raised portion and the film thickness TB on the recessed portion of the transparent ridged layer 5 was 1.05.

<Comparative Example 8>

A decorative sheet of Comparative Example 8 was obtained in the same manner as in Comparative Example 7, except that the ionizing radiation curable resin of Comparative Example 7 was replaced with the following resin.

- Ionizing radiation curable resin

Type: ethoxylated pentaerythritol tetraacrylate (EO 35 mol added)

Product name: NK Ester ATM 35E (manufactured by Shin-Nakamura Chemical Co., Ltd.)

<Comparative Example 9>

A decorative sheet of Comparative Example 9 was obtained in the same manner as in Comparative Example 7, except that the ionizing radiation curable resin of Comparative Example 7 was replaced with the following resin.

- Ionizing radiation curable resin

Type: ethoxylated pentaerythritol hexaacrylate (EO 30 mol added)

<Comparative Example 10>

After forming a transparent ridged layer 5 in Comparative Example 4, the following surface protective layer coating liquid was applied. The layer thickness of the surface protective layer coating liquid was 5 $\mu$m, and a decorative sheet with a total thickness of 65 $\mu$m of Comparative Example 10 was obtained. The relational expression TA/TB between the film thickness TA on the raised portion and the film thickness TB on the recessed portion of the transparent ridged layer 5 was 1.0.

(Surface protective layer coating liquid)

The surface protective layer coating liquid was composed by combining a two-component curable urethane resin (W184, manufactured by DIC Graphics Corporation) with the following additives (particles, photostabilizer, and ultraviolet absorber).

- Particles

Product name: SYLYSIA 250N (manufactured by Fuji Silysia Chemical Ltd.)

Particle size: 5 $\mu$m

Compounding amount: 0.5 parts by mass

- Photostabilizer

Product name: Tinuvin 123 (manufactured by BASF Corporation)

Compounding amount: 5 parts by mass

- Ultraviolet absorber

Product name: Tinuvin 329 (manufactured by BASF Corporation)

Compounding amount: 2.5 parts by mass

<Comparative Example 11>

A decorative sheet of Comparative Example 11 was obtained in the same manner as in Comparative Example 10, except that the ionizing radiation curable resin, which formed the transparent ridged layer 5 in Comparative Example 10, was replaced with the following resin. The relational expression TA/TB between the film thickness TA on the raised portion and the film thickness TB on the recessed portion of the transparent ridged layer 5 was 1.0.

- Ionizing radiation curable resin

Type: pentaerythritol tetraacrylate

Product name: NK Ester A-TMMT (manufactured by Shin-Nakamura Chemical Co., Ltd.)

<Comparative Example 12>

A decorative sheet of Comparative Example 11 was obtained in the same manner as in Comparative Example 10, except that the ionizing radiation curable resin, which formed the transparent ridged layer 5 in Comparative Example 10, was replaced with the following resin. The relational expression TA/TB between the film thickness TA on the raised portion and the film thickness TB on the recessed portion of the transparent ridged layer 5 was 1.0.

- Ionizing radiation curable resin

Type: dipentaerythritol hexaacrylate

<Comparative Example 13>

A decorative sheet of Comparative Example 13 was obtained in the same manner as in Example 20, except that the layer thickness of the surface protective layer in Example 20 was changed to 0.5 μm. The relational expression TA/TB between the film thickness TA on the raised portion and the film thickness TB on the recessed portion of the transparent ridged layer 5 was 4.0.

<Comparative Example 14>

A decorative sheet of Comparative Example 14 was obtained in the same manner as in Example 20, except that the layer thickness of the surface protective layer in Example 20 was changed to 30 μm. The relational expression TA/TB between the film thickness TA on the raised portion and the film thickness TB on the recessed portion of the transparent ridged layer 5 was 0.05.

[Evaluation]

Examples 1 to 43 and Comparative Examples 1 to 14 above were evaluated. In this example, those that were evaluated as "good" and "fair" were regarded as a pass because there was no problem in practical use.

<Surface condition>

Regarding the surface condition, the surface uniformity was visually evaluated.
The evaluation criteria were as follows.

Good: The surface condition was uniform.

Fair: Some areas were not uniform.

Poor: The surface condition was non-uniform over the entire surface

<60° Gloss>

Regarding the gloss value, the 60° gloss was measured using a Rhopoint IQ (manufactured by Konica Minolta, Inc.).

<Fingerprint resistance: wipeability evaluation>

Fingerprint wipeability evaluation was carried out to evaluate fingerprint resistance. The 60° gloss of the surface of each decorative sheet was measured and regarded as an "initial gloss." Subsequently, a fingerprint resistance evaluation liquid was applied to the outermost layer, and then the fingerprint resistance evaluation liquid applied to the decorative sheet surface was wiped off. Thereafter, the 60° gloss of the area where the fingerprint resistance evaluation liquid was wiped off was measured and regarded as "gloss after wiping." The fingerprint resistance evaluation liquid used herein was a higher fatty acid.
The fingerprint wiping rate was calculated as follows.

$$\text{Fingerprint wiping rate (\%)} = (\text{gloss after wiping/initial gloss}) \times 100$$

The evaluation criteria were as follows.

Good: 70% or greater and less than 250%

Fair: 50% or greater and less than 70%, or 250% or greater and less than 300%

Poor: less than 50%, or 300% or greater

<Stain resistance>

The stain resistance was evaluated by the Stain A test defined in the Japanese Agricultural Standards (JAS). Specifically, lines with a width of 10 mm were drawn each using blue ink, black quick-drying ink, and red crayon, and left for 4 hours. Then, the blue ink, black quick-drying ink, and red crayon lines were wiped off with a cloth soaked in ethanol, and ink stain resistance was evaluated.
The evaluation criteria were as follows.

Good: Each color line could be easily wiped off.

Fair: Although part of each color line could be wiped off, some stains remained.

Poor: Each color line could not be wiped off.

<Scratch resistance: steel wool rubbing test>

After the obtained decorative sheet was attached to a wood substrate B using a urethane-based adhesive, a steel wool rubbing test was carried out to evaluate the scratch resistance. Specifically, steel wool was reciprocated 20 times with a load of 100 g applied, and the surface of the decorative sheet was visually checked for scratches and changes in gloss.
The evaluation criteria were as follows.

Good: No scratches or changes in gloss occurred on the surface.

Fair: Minor scratches and/or changes in gloss occurred on the surface.

Poor: Significant scratches and/or changes in gloss occurred on the surface.

<Bending processability>

In a bending suitability test, each sheet was bonded to a wood substrate B, and on the other side of the substrate B, a V-shaped groove was made up to the boundary where the substrate B and the decorative sheet 1 were bonded together so as not to scratch the other side of the decorative sheet 1. Next, the substrate B was bent 90 degrees along the V-shaped groove so that the surface of the decorative sheet 1 was a mountain fold. The surface of the decorative sheet 1 was observed under an optical microscope to see if there was any blushing or cracking on the bent portion, and bending processability was evaluated.
The evaluation criteria were as follows. When the evaluation was "Fair" or higher, it was deemed that there was no problem in practical use.

Good: There was no blushing or cracking.

Fair: There was partial blushing.

Poor: Blushing was observed all over the surface, or cracking was observed in some areas.

<Weather resistance: super UV tester>

The appearance of the decorative sheet was visually evaluated after an accelerated weathering test according to the following criteria. The accelerated weathering test was performed using an EYE Super UV Tester (SUV-W161; manufactured by Iwasaki Electric Co., Ltd.) at a black panel temperature of 63°C and an illuminance of 65 mW/cm$^2$ over a period of (UV irradiation 20 hours + condensation 4 hours) for each cycle, and the appearance of the decorative sheet was visually evaluated after 30 cycles (720 hours).
The evaluation criteria were as follows.

Good: No change in appearance of decorative sheet
Fair: Blushing observed in decorative sheet
Poor: Cracking observed in decorative sheet

Tables 1 and 2 show the evaluation results.

[Table 1]

| | Trans parent resin layer | Surface shape | RSm /Ra | Transparent ridged layer | | | | | | Thickness (μm) of surface protective layer | | | | Physical property evaluation | | | | | | |
|---|---|---|---|---|---|---|---|---|---|---|---|---|---|---|---|---|---|---|---|---|
| | | | | Thickness (μm) | Acrylate resin: Number of functional groups | Repeating structure: Structure | Repeating structure: Number of repetitions | Additive: Particles: Amount added (parts) | Additive: Photostabilizer: Amount added (parts) | Thickness (μm) = (TA+TB)/2 | TA/TB | Additive: Particles: Amount added (parts) | Additive: Photostabilizer: Amount added (parts) | Surface condition | 60° gloss | Finger print resistance | Stain resistance: Stain A test | Scratch resistance: Steel | Processability: Bending processability | Weather resistance: Super UV |
| Ex. 1 | No | Ridged shape | 120 | 5 | 3 | $C_2H_4O$ | 6 | 0.5 | 3 | None | - | - | - | Good | 3 | Good | Good | Good | Good | Good |
| Ex. 2 | No | Ridged shape | 100 | 5 | 3 | $C_2H_4O$ | 15 | 0.5 | 3 | None | - | - | - | Good | 2 | Good | Fair | Fair | Good | Good |
| Ex. 3 | No | Ridged shape | 200 | 5 | 3 | $C_2H_4O$ | 3 | 0.5 | 3 | None | - | - | - | Good | 5 | Good | Good | Good | Good | Good |
| Ex. 4 | No | Ridged shape | 120 | 5 | 3 | $C_3H_6O$ | 6 | 0.5 | 3 | None | - | - | - | Good | 3 | Good | Good | Good | Good | Good |
| Ex. 5 | No | Ridged shape | 120 | 5 | 3 | $C_6H_{10}O_2$ | 3 | 0.5 | 3 | None | - | - | - | Good | 10 | Good | Good | Good | Good | Good |
| Ex. 6 | No | Ridged shape | 300 | 1 | 3 | $C_2H_4O$ | 6 | 0.5 | 3 | None | - | - | - | Fair | 8 | Good | Good | Good | Good | Good |
| Ex. 7 | No | Ridged shape | 200 | 2 | 3 | $C_2H_4O$ | 6 | 0.5 | 3 | None | - | - | - | Good | 5 | Good | Good | Good | Good | Good |
| Ex. 8 | No | Ridged shape | 80 | 20 | 3 | $C_2H_4O$ | 6 | 0.5 | 3 | None | - | - | - | Good | 2 | Good | Fair | Fair | Good | Good |
| Ex. 9 | No | Ridged shape | 50 | 25 | 3 | $C_2H_4O$ | 6 | 0.5 | 3 | None | - | - | - | Good | 1.5 | Good | Fair | Fair | Good | Good |
| Ex. 10 | No | Ridged shape | 120 | 5 | 3 | $C_2H_4O$ | 6 | None | 3 | None | - | - | - | Fair | 5 | Good | Good | Good | Good | Good |
| Ex. 11 | No | Ridged shape | 120 | 5 | 3 | $C_2H_4O$ | 6 | 0.5 | 0.05 | None | - | - | - | Good | 2 | Good | Good | Good | Good | Fair |
| Ex. 12 | No | Ridged shape | 150 | 5 | 3 | $C_2H_4O$ | 6 | 0.5 | 5 | None | - | - | - | Good | 6 | Good | Good | Good | Good | Good |
| Ex. 13 | No | Ridged shape | 120 | 5 | 4 | $C_2H_4O$ | 35 | 0.5 | 3 | None | - | - | - | Good | 3 | Good | Good | Good | Good | Good |
| Ex. 14 | No | Ridged shape | 100 | 5 | 4 | $C_2H_4O$ | 50 | 0.5 | 3 | None | - | - | - | Good | 2 | Good | Good | Good | Good | Good |
| Ex. 15 | No | Ridged shape | 100 | 5 | 4 | $C_2H_4O$ | 20 | 0.5 | 3 | None | - | - | - | Good | 5 | Good | Good | Good | Good | Good |
| Ex. 16 | No | Ridged shape | 150 | 5 | 6 | $C_2H_4O$ | 30 | 0.5 | 3 | None | - | - | - | Good | 5 | Good | Good | Good | Fair | Good |
| Ex. 17 | No | Ridged shape | 150 | 5 | 5 | $C_2H_4O$ | 30 | 0.5 | 3 | None | - | - | - | Good | 5 | Good | Good | Good | Fair | Good |
| Ex. 18 | No | Ridged shape | 150 | 5 | 6 | $C_2H_4O$ | 50 | 0.5 | 3 | None | - | - | - | Good | 3 | Good | Good | Good | Fair | Good |
| Ex. 19 | No | Ridged shape | 120 | 5 | 3 | $C_2H_4O$ | 6 | 0.5 | 3 | 5 | 1.2 | 0.5 | 3 | Good | 3 | Good | Good | Good | Good | Good |
| Ex. 20 | No | Ridged shape | 120 | 5 | 3 | $C_2H_4O$ | 6 | 0.5 | 3 | 5 | 1.2 | None | 3 | Good | 3 | Good | Good | Good | Good | Good |
| Ex. 21 | No | Ridged shape | 120 | 5 | 3 | $C_2H_4O$ | 6 | 0.5 | 3 | 1 | 2.0 | None | 3 | Fair | 3 | Good | Good | Good | Good | Good |
| Ex. 22 | No | Ridged shape | 120 | 5 | 3 | $C_2H_4O$ | 6 | 0.5 | 3 | 2 | 1.6 | None | 3 | Good | 3 | Good | Good | Good | Good | Good |
| Ex. 23 | No | Ridged shape | 200 | 5 | 3 | $C_2H_4O$ | 6 | 0.5 | 3 | 20 | 0.5 | None | 3 | Fair | 5 | Good | Good | Good | Good | Good |
| Ex. 24 | No | Ridged shape | 250 | 5 | 3 | $C_2H_4O$ | 6 | 0.5 | 3 | 25 | 0.1 | None | 3 | Fair | 8 | Good | Good | Good | Good | Good |
| Ex. 25 | No | Ridged shape | 120 | 5 | 3 | $C_2H_4O$ | 6 | 0.5 | None | 5 | 1.2 | None | None | Good | 2.5 | Good | Good | Good | Good | Fair |
| Ex. 26 | No | Ridged shape | 120 | 5 | 3 | $C_2H_4O$ | 6 | 0.5 | None | 5 | 1.2 | None | 1 | Good | 2.5 | Good | Good | Steel | Good | Fair |
| Ex. 27 | No | Ridged shape | 120 | 5 | 3 | $C_2H_4O$ | 6 | 0.5 | None | 5 | 1.2 | None | 5 | Good | 2.5 | Good | Good | Good | Good | Good |
| Ex. 28 | No | Ridged shape | 120 | 5 | 3 | $C_2H_4O$ | 6 | 0.5 | None | 5 | 1.2 | None | 10 | Fair | 2.5 | Good | Good | Good | Good | Good |
| Ex. 29 | No | Ridged shape | 120 | 5 | 3 | $C_2H_4O$ | 6 | 0.5 | 0.05 | 5 | 1.2 | None | 5 | Good | 2 | Good | Good | Good | Good | Fair |
| Ex. 30 | No | Ridged shape | 120 | 5 | 3 | $C_2H_4O$ | 6 | 0.5 | 0.2 | 5 | 1.2 | None | 5 | Good | 2 | Good | Good | Good | Good | Good |
| Ex. 31 | No | Ridged shape | 120 | 5 | 3 | $C_2H_4O$ | 6 | 0.5 | 1 | 5 | 1.2 | None | 5 | Good | 2.5 | Good | Good | Good | Good | Good |

| | Transparent resin layer | Surface shape | RSm/Ra | Thickness (μm) | Number of functional groups | Structure | Number of repetitions | Particles Amount added (parts) | Photostabilizer Amount added (parts) | Thickness (μm) = (TA+TB)/2 | TA/TB | Particles Amount added (parts) | Photostabilizer Amount added (parts) | Surface condition | 60° gloss | Finger print resistance | Stain A test | Steel | V cut | Super UV |
|---|---|---|---|---|---|---|---|---|---|---|---|---|---|---|---|---|---|---|---|---|
| Ex. 32 | No | Ridged shape | 120 | 5 | 3 | $C_2H_4O$ | 6 | 0.5 | 3 | 5 | 1.2 | None | 5 | Good | 3 | Good | Good | Good | Good | Good |
| Ex. 33 | No | Ridged shape | 120 | 5 | 3 | $C_2H_4O$ | 6 | 0.5 | 5 | 5 | 1.2 | None | 5 | Good | 6 | Good | Good | Good | Good | Good |
| Ex. 34 | Yes | Ridged shape | 140 | 5 | 3 | $C_2H_4O$ | 3 | 0.5 | 3 | None | - | - | - | Good | 5 | Good | Good | Good | Good | Good |
| Ex. 35 | Yes | Ridged shape | 90 | 5 | 3 | $C_3H_6O$ | 6 | 0.5 | 3 | None | - | - | - | Good | 3 | Good | Good | Good | Good | Good |
| Ex. 36 | Yes | Ridged shape | 30 | 25 | 3 | $C_2H_4O$ | 6 | 0.5 | 3 | None | - | - | - | Good | 1.5 | Good | Good | Good | Good | Good |
| Ex. 37 | Yes | Ridged shape | 140 | 5 | 3 | $C_2H_4O$ | 3 | 0.5 | 3 | 5 | 1.2 | None | 5 | Good | 5 | Good | Good | Good | Good | Good |
| Ex. 38 | Yes | Ridged shape | 90 | 5 | 3 | $C_3H_6O$ | 6 | 0.5 | 3 | 5 | 1.2 | None | 5 | Good | 3 | Good | Good | Good | Good | Good |
| Ex. 39 | Yes | Ridged shape | 30 | 25 | 3 | $C_2H_4O$ | 6 | 0.5 | 3 | 5 | 1.2 | None | 5 | Good | 1.5 | Good | Good | Good | Good | Good |
| Ex. 40 | No | Ridged shape | 300 | 1 | 3 | $C_2H_4O$ | 6 | 0.5 | 3 | 5 | 1.2 | 0.5 | 3 | Fair | 8 | Good | Good | Good | Good | Good |
| Ex. 41 | No | Ridged shape | 200 | 2 | 3 | $C_2H_4O$ | 6 | 0.5 | 3 | 5 | 1.2 | 0.5 | 3 | Good | 5 | Good | Good | Good | Good | Good |
| Ex. 42 | No | Ridged shape | 80 | 20 | 3 | $C_2H_4O$ | 6 | 0.5 | 3 | 5 | 1.2 | 0.5 | 3 | Good | 2 | Good | Good | Good | Good | Good |
| Ex. 43 | No | Ridged shape | 50 | 25 | 3 | $C_2H_4O$ | 6 | 0.5 | 3 | 5 | 1.2 | 0.5 | 3 | Good | 1.5 | Good | Good | Good | Good | Good |

[Table 2]

| | | | | Material formulation | | | | | | | | | | Physical property evaluation | | | | | | |
|---|---|---|---|---|---|---|---|---|---|---|---|---|---|---|---|---|---|---|---|---|
| | | | | Transparent ridged layer | | | | | | Thickness (μm) of surface protective layer | | | | | | | Stain resistance | Scratch resistance | Processability | Weather resistance |
| | Transparent resin layer | Surface shape | RSm/Ra | Thickness (μm) | Acrylate resin | | | Additive | | Thickness (μm) = (TA+TB)/2 | TA/TB | Additive | | Surface condition | 60° gloss | Finger print resistance | | | | |
| | | | | | Number of functional groups | Repeating structure | | Particles | Photostabilizer | | | Particles | Photostabilizer | | | | Stain A test | Steel | V cut | Super UV |
| | | | | | | Structure | Number of repetitions | Amount added (parts) | Amount added (parts) | | | Amount added (parts) | Amount added (parts) | | | | | | | |
| Comp. Ex. 1 | No | Irregularities with particles | 400 | 5 | 3 | $C_2H_4O$ | 6 | 15 | 3 | None | - | - | - | Good | 10 | Poor | Poor | Poor | Good | Good |
| Comp. Ex. 2 | No | Irregularities with particles | 400 | 5 | 4 | $C_2H_4O$ | 35 | 15 | 3 | None | - | - | - | Good | 10 | Poor | Poor | Poor | Fair | Good |
| Comp. Ex. 3 | No | Irregularities with particles | 400 | 5 | 6 | $C_2H_4O$ | 30 | 15 | 3 | None | - | - | - | Good | 15 | Poor | Poor | Poor | Poor | Good |
| Comp. Ex. 4 | No | Flat | 4,000 | 5 | 3 | None | 0 | 0.5 | 3 | None | - | - | - | Good | 90 | Poor | Good | Fair | Good | Good |
| Comp. Ex. 5 | No | Flat | 4,000 | 5 | 4 | None | 0 | 0.5 | 3 | None | - | - | - | Good | 90 | Poor | Good | Fair | Good | Good |
| Comp. Ex. 6 | No | Flat | 4,000 | 5 | 6 | None | 0 | 0.5 | 3 | None | - | - | - | Good | 90 | Poor | Good | Fair | Fair | Good |
| Comp. Ex. 7 | No | Irregularities with particles | 400 | 5 | 3 | $C_2H_4O$ | 6 | 15 | 3 | 5 | 1.05 | None | 5 | Fair | 10 | Poor | Fair | Fair | Good | Good |
| Comp. Ex. 8 | No | Irregularities with particles | 400 | 5 | 4 | $C_2H_4O$ | 35 | 15 | 3 | 5 | 1.05 | None | 5 | Fair | 10 | Poor | Fair | Fair | Good | Good |
| Comp. Ex. 9 | No | Irregularities with particles | 400 | 5 | 6 | $C_2H_4O$ | 30 | 15 | 3 | 5 | 1.05 | None | 5 | Fair | 15 | Poor | Fair | Fair | Fair | Good |
| Comp. Ex. 10 | No | Flat | 4,000 | 5 | 3 | None | 0 | 0.5 | 3 | 5 | 1.0 | None | 5 | Good | 90 | Poor | Good | Good | Good | Good |
| Comp. Ex. 11 | No | Flat | 4,000 | 5 | 4 | None | 0 | 0.5 | 3 | 5 | 1.0 | None | 5 | Good | 90 | Poor | Good | Good | Good | Good |
| Comp. Ex. 12 | No | Flat | 4,000 | 5 | 6 | None | 0 | 0.5 | 3 | 5 | 1.0 | None | 5 | Good | 90 | Poor | Good | Good | Good | Good |
| Comp. Ex. 13 | No | Ridged shape | 120 | 5 | 3 | $C_2H_4O$ | 6 | 0.5 | 3 | 0.5 | 4.0 | None | 3 | Poor | 3 | Good | Good | Good | Good | Good |
| Comp. Ex. 14 | No | Ridged shape | 400 | 5 | 3 | $C_2H_4O$ | 6 | 0.5 | 3 | 30 | 0.05 | None | 3 | Poor | 15 | Fair | Good | Good | Good | Good |

In Examples 1 to 3 of Table 1, a trifunctional acrylate resin having a repeating structure was used as the ionizing radiation curable resin forming the transparent ridged layer. As the number of repetitions increased, stain resistance and scratch resistance tended to deteriorate slightly, but were at practically acceptable levels.

In Examples 1, 4, and 5 of Table 1, a trifunctional acrylate resin having a repeating structure was used as the ionizing radiation curable resin forming the transparent ridged layer, and the repeating structures were different. The ε-caprolactone (CL) structure (Example 5) showed slightly higher 60° gloss, which was at a practically acceptable level.

In Examples 1 and 6 to 9 of Table 1, the transparent ridged layers had different thicknesses. In Example 6, in which the thickness was 1 μm and thinnest, shaping was not stable and the surface condition was deteriorated. When the thickness increased to 20 μm or 25 μm, it was strongly shaped and 60° gloss was reduced; thus, stain resistance and scratch resistance were slightly deteriorated but were at practically acceptable levels.

In Example 10 of Table 1, no particles were added to the transparent ridged layer. Without particles, shaping was not stable, and the surface condition was slightly deteriorated but was at a practically acceptable level.

In Examples 1, 11, and 12 of Table 1, the photostabilizer was added in different amounts to the transparent ridged layer. In Example 11, in which the amount added was as low as 0.05 parts by mass, weather resistance was slightly deteriorated. In Example 12, in which the amount added was as large as 5 parts by mass, the photostabilizer inhibited shaping; thus, 60° gloss was slightly increased but was at a practically acceptable level.

In Examples 13 to 15 of Table 1, a tetrafunctional acrylate resin having a repeating structure was used as the ionizing radiation curable resin forming the transparent ridged layer. As the number of repetitions was less, 60° gloss was higher, and the number of repetitions was more, 60° gloss was lower; however, they were at practically acceptable levels.

In Examples 16 to 18 of Table 1, a pentafunctional or hexafunctional acrylate resin having a repeating structure was used as the ionizing radiation curable resin forming the transparent ridged layer. Since the degree of crosslinking was high, processability was slightly reduced but was at a practically acceptable level.

In Examples 19 to 33 and Examples 37 to 43 of Table 1, a surface protective layer was laminated on the transparent ridged layer.

In Examples 19 and 20, although there was a difference in whether or not the surface protective layer contained particles, both showed good physical properties.

In Examples 21 to 24 of Table 1, the surface protective layers had different thicknesses. In Examples 21 and 22, in which the film thickness was as thin as 1 μm or 2 μm, TA/TB was as high as 2.0 or 1.6. In Examples 23 and 24, in which the film thickness was as thick as 20 μm or 25 μm, TA/TB was as low as 0.5 or 0.1; however, they all showed good physical properties. With the thinnest film thickness of 1 μm and thicker film thicknesses of 20 μm and 25 μm, the surface condition was slightly deteriorated due to thickness variation, but was at a practically acceptable level.

In Examples 25 to 28 of Table 1, the transparent ridged layer did not contain a photostabilizer, and the surface protective layer contained a different amount of photostabilizer. Examples 27 and 28, in which the surface protective layer contained 5 parts by mass or 10 parts by mass of photostabilizer, showed good physical properties. In Example 25, which did not contain a photostabilizer in the surface protective layer, and in Example 26, which contained only 1 part by mass of photostabilizer, weather resistance was slightly deteriorated but was at a practically acceptable level. In Example 28, which contained 10 parts by mass of photostabilizer in the surface protective layer, the excess amount of photostabilizer added caused bleeding out; thus, the surface condition was deteriorated but was at a practically acceptable level.

In Examples 29 to 33 of Table 1, the surface protective layer contained 5 parts by mass of photostabilizer, and the amount of photostabilizer in the transparent ridged layer was different. Since the surface protective layer contained 5 parts by mass of photostabilizer, generally good weather resistance was obtained. In Example 29, the amount of photostabilizer in the transparent ridged layer was 0.05 parts by mass; thus, weather resistance was reduced but was at a practically acceptable level. Examples 30 to 33, in which the amount of photostabilizer in the transparent ridged layer was 0.2 parts by mass or greater, showed good weather resistance. Further, in Examples 31 to 33, in which the transparent ridged layer contained 1 part by mass or greater of photostabilizer, 60° gloss was slightly increased, and as the amount of photostabilizer was larger, 60° gloss increased but was at a practically acceptable level.

In Examples 34 to 43 of Table 1, the ratio RSm/Ra between the surface roughness index RSm and the surface roughness index Ra was different, and a transparent resin layer was provided between the primary film layer and the transparent ridged layer. That is, a transparent resin layer was provided, and its film thickness was changed to vary the vertical surface roughness index (in the longitudinal direction) Ra, and to vary the ratio RSm/Ra between the surface roughness index RSm and the surface roughness index Ra. There were differences in whether or not the surface protective layer was present, and in the film thickness of the transparent resin layer; however, all of them showed good physical properties.

Next, in Comparative Examples 1 to 3 of Table 2, the step of applying excimer VUV light was not performed, and irregularities were formed with particles. Since the irregularities with particles were larger than irregularities formed with excimer VUV light, fingerprint resistance was deteriorated. Further, since a larger amount of particles was contained relative to the examples, stain resistance and scratch resistance were significantly deteriorated.

In Comparative Examples 4 to 6 of Table 2, an acrylate resin without a repeating structure was used. 60° gloss was 90, irregularities could not be imparted in comparison with the examples, and fingerprint resistance was significantly deteriorated.

In Comparative Examples 7 to 12 of Table 2, a surface protective layer was laminated on each of Comparative Examples 1 to 6. Stain resistance and scratch resistance were slightly improved; however, in comparison with the examples, fingerprint resistance was poor and was not at a practically acceptable level.

Further, in Comparative Example 13 of Table 2, the surface protective layer was made thinner in Example 21. In Comparative Example 14, the surface protective layer was made thicker in Example 24. When the surface protective layer was made thinner, TA/TB exceeded 2.0, and the film thickness TA of the surface protective layer on the raised portion of the transparent ridged layer became too large, which increased the gap from the film thickness TB of the surface protective layer on the recessed portion of the transparent ridged layer, and the surface condition became uneven. In contrast, when the surface protective layer was made thicker, TA/TB was less than 0.1, and the shaping of the transparent ridged layer almost disappeared. Accordingly, 60° gloss increased to 15, and fingerprint resistance was deteriorated. In addition, since a thick film was applied onto the transparent ridged layer, the surface condition was also deteriorated.

The above results revealed that the decorative sheets of Examples 1 to 43 have low gloss and satisfy all of fingerprint resistance, scratch resistance, stain resistance, weather resistance, and bending processability.

Further, the decorative sheet of the present invention is not limited to the aforementioned embodiments and examples, and various modifications may be made within a range not departing from the spirit of the present invention.

In addition, the present invention can take the following configurations, for example.

(1) A decorative sheet including a primary film layer, a transparent ridged layer, and a surface protective layer laminated in this order, wherein

the transparent ridged layer has asperities having ridge parts protruding in a ridged shape, and

the relationship between a film thickness TA of the surface protective layer on a raised portion of the transparent ridged layer and a film thickness TB of the surface protective layer on a recessed portion of the transparent ridged layer satisfies $0.1 \leq TA/TB \leq 2.0$.

(2) The decorative sheet according to (1) above, wherein the relationship between the film thickness TA of the surface protective layer on the raised portion of the transparent ridged layer and the film thickness TB of the surface protective layer on the recessed portion of the transparent ridged layer satisfies $1.0 \leq TA/TB \leq 1.9$.

(3) The decorative sheet according to (1) or (2) above, wherein a main material of the transparent ridged layer is an ionizing radiation curable resin,

a main component of the ionizing radiation curable resin is an acrylic resin having a repeating structure,

the repeating structure is any of ethylene oxide, propylene oxide, and ε-caprolactone structures, and

the ratio RSm/Ra between a surface roughness index RSm and a surface roughness index Ra of the asperities of the surface protective layer is within the range of 10 or greater and 300 or less.

(4) The decorative sheet according to any one of (1) to (3) above, wherein at least one of the transparent ridged layer and the surface protective layer contains a hindered amine-based photostabilizer.

(5) A decorative sheet including a primary film layer and a transparent ridged layer laminated in this order, wherein

the transparent ridged layer is an uppermost layer and has, on a side opposite to the primary film layer, asperities composed of ridge parts protruding in a ridged shape, and

the asperities have a ratio RSm/Ra between a surface roughness index RSm and a surface roughness index Ra in the range of 10 or greater and 300 or less,

a main material of the transparent ridged layer is an ionizing radiation curable resin,

a main component of the ionizing radiation curable resin is an acrylic resin having a repeating structure,

the repeating structure is any of ethylene oxide, propylene oxide, and ε-caprolactone structures, and

the transparent ridged layer contains a hindered amine-based photostabilizer in an amount within the range of 0.05 parts by mass or greater and 5 parts by mass or less relative to 100 parts by mass of the resin contained in the transparent ridged layer.

(6) The decorative sheet according to (5) above, wherein the hindered amine-based photostabilizer is contained in an amount within the range of 0.2 parts by mass or greater and 3 parts by mass or less relative to 100 parts by mass of the resin contained in the transparent ridged layer.

(7) The decorative sheet according to any one of (1) to (6) above, wherein the acrylic resin having a repeating structure is trifunctional, and
the number of repetitions of the repeating structure is 3 or more.

(8) The decorative sheet according to any one of (1) to (6) above, wherein the acrylic resin having a repeating structure is a tetrafunctional acrylic resin or has a dipentaerythritol skeleton, and
the number of repetitions of the repeating structure is 12 or more.

(9) The decorative sheet according to any one of (1) to (8) above, wherein the transparent ridged layer has a film thickness within the range of 2 μm or greater and 20 μm or less.

(10) The decorative sheet according to any one of (1) to (9) above, wherein the surface protective layer has a film thickness within the range of 2 μm or greater and 20 μm or less.

(11) A method for producing a decorative sheet, wherein a surface of an ionizing radiation curable resin applied to a primary film layer is irradiated with light at a wavelength of 200 nm or less, and then irradiated with ionizing radiation or UV light, thereby forming a surface protective layer having ridge parts protruding in a ridged shape.

(12) The method for producing a decorative sheet according to (11) above, wherein UV light has a wavelength of 172 nm.

[Reference Signs List]

1: Decorative sheet

2: Primary film layer

3: Pattern layer

4: Transparent resin layer

4a: Embossed pattern

4b: Adhesive resin layer

5: Transparent ridged layer

6: Surface protective layer

7: Primer layer

B: Substrate

**Claims**

1. A decorative sheet comprising a primary film layer, a transparent ridged layer, and a surface protective layer laminated in this order, wherein

    the transparent ridged layer has asperities having ridge parts protruding in a ridged shape on a surface of the surface protective layer side, and
    the relationship between a film thickness TA of the surface protective layer on a raised portion of the transparent ridged layer and a film thickness TB of the surface protective layer on a recessed portion of the transparent ridged layer satisfies $0.1 \leq TA/TB \leq 2.0$.

**2.** The decorative sheet according to claim 1, wherein
the relationship between the film thickness TA of the surface protective layer on the raised portion of the transparent ridged layer and the film thickness TB of the surface protective layer on the recessed portion of the transparent ridged layer satisfies $1.0 \leq TA/TB \leq 1.9$.

**3.** The decorative sheet according to claim 1 or 2, wherein

a main material of the transparent ridged layer is an ionizing radiation curable resin,
a main component of the ionizing radiation curable resin is an acrylic resin having a repeating structure,
the repeating structure is any of ethylene oxide, propylene oxide, and ε-caprolactone structures, and
a ratio RSm/Ra between a surface roughness index RSm and a surface roughness index Ra of the asperities of the surface protective layer is within the range of 10 or greater and 300 or less.

**4.** The decorative sheet according to claim 1 or 2, wherein
at least one of the transparent ridged layer and the surface protective layer contains a hindered amine-based photostabilizer.

**5.** A decorative sheet comprising a primary film layer and a transparent ridged layer laminated in this order, wherein

the transparent ridged layer is an uppermost layer and has, on its top surface, asperities composed of ridge parts protruding in a ridged shape, and the asperities have a ratio RSm/Ra between a surface roughness index RSm and a surface roughness index Ra within the range of 10 or greater and 300 or less,
a main material of the transparent ridged layer is an ionizing radiation curable resin,
a main component of the ionizing radiation curable resin is an acrylic resin having a repeating structure,
the repeating structure is any of ethylene oxide, propylene oxide, and ε-caprolactone structures, and
the transparent ridged layer contains a hindered amine-based photostabilizer in an amount within the range of 0.05 parts by mass or greater and 5 parts by mass or less relative to 100 parts by mass of the resin contained in the transparent ridged layer.

**6.** The decorative sheet according to claim 5, wherein
the hindered amine-based photostabilizer is contained in an amount within the range of 0.2 parts by mass or greater and 3 parts by mass or less relative to 100 parts by mass of the resin contained in the transparent ridged layer.

**7.** The decorative sheet according to claim 5 or 6, wherein

the acrylic resin having a repeating structure is trifunctional, and
the number of repetitions of the repeating structure is 3 or more.

**8.** The decorative sheet according to claim 5 or 6, wherein

the acrylic resin having a repeating structure is a tetrafunctional acrylic resin or an acrylic resin having a dipentaerythritol skeleton, and
the number of repetitions of the repeating structure is 12 or more.

**9.** The decorative sheet according to any one of claims 1, 2, 5 and 6, wherein
the transparent ridged layer has a film thickness within the range of 2 μm or greater and 20 μm or less.

**10.** The decorative sheet according to claim 1 or 2, wherein
the surface protective layer has a film thickness within the range of 2 μm or greater and 20 μm or less.

**11.** A method for producing the decorative sheet according to any one of claims 1, 2, 5 and 6, comprising the steps of:

applying an ionizing radiation curable resin to a primary film layer;
irradiating a surface of the applied ionizing radiation curable resin with light at a wavelength of 200 nm or less; and
after irradiation with light at a wavelength of 200 nm or less, irradiating the surface of the ionizing radiation curable resin with ionizing radiation or UV light to form the transparent ridged layer having the ridge parts protruding in a ridged shape.

12. The method for producing the decorative sheet according to claim 11, wherein UV light has a wavelength of 172 nm.

# FIG.1

# FIG.2

# FIG.3

# FIG.4

200 μm

# FIG.5

## INTERNATIONAL SEARCH REPORT

| | International application No. |
|---|---|
| | **PCT/JP2023/025150** |

**A. CLASSIFICATION OF SUBJECT MATTER**

**B32B 3/30**(2006.01)i; **B32B 27/00**(2006.01)i; **B32B 27/30**(2006.01)i
FI:    B32B3/30; B32B27/00 E; B32B27/30 A

According to International Patent Classification (IPC) or to both national classification and IPC

**B. FIELDS SEARCHED**

Minimum documentation searched (classification system followed by classification symbols)

B32B1/00-43/00; B05D1/00-7/26; E04F15/00-15/22; C08J7/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2022/054645 A1 (DAI NIPPON PRINTING CO., LTD.) 17 March 2022 (2022-03-17) claims 1-2, 4-11, paragraphs [0002], [0087]-[0104], [0124]-[0134], examples | 5-9, 11-12 |
| Y | JP 2020-111715 A (MITSUBISHI CHEMICAL HOLDINGS CORP.) 27 July 2020 (2020-07-27) claims, paragraphs [0001], [0006], [0019], example 1 | 5-9, 11-12 |
| Y | JP 2017-171794 A (TOYO INK SC HOLDINGS CO., LTD.) 28 September 2017 (2017-09-28) claims, paragraphs [0001], [0002], [0006], [0023]-[0027], [0080]-[0083] | 5-9, 11-12 |
| A | JP 2016-99671 A (DAI NIPPON PRINTING CO., LTD.) 30 May 2016 (2016-05-30) whole document | 1-4, 10-12 |
| A | JP 2014-88026 A (DAI NIPPON PRINTING CO., LTD.) 15 May 2014 (2014-05-15) whole document | 1-12 |
| A | KR 10-2021-0043050 A (LG HAUSYS, LTD.) 21 April 2021 (2021-04-21) whole document | 1-12 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 September 2023** | **03 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 552 838 A1**

**INTERNATIONAL SEARCH REPORT**

International application No.

**PCT/JP2023/025150**

**C. DOCUMENTS CONSIDERED TO BE RELEVANT**

| Category* | Citation of document, with indication, where appropriate, of the relevant passages | Relevant to claim No. |
|---|---|---|
| P, A | WO 2022/145137 A1 (TOPPAN INC.) 07 July 2022 (2022-07-07)<br>whole document | 1-12 |
| P, A | WO 2022/239270 A1 (TOPPAN INC.) 17 November 2022 (2022-11-17)<br>whole document | 1-12 |
| P, A | WO 2023/106340 A1 (TOPPAN INC.) 15 June 2023 (2023-06-15)<br>whole document | 1-12 |

Form PCT/ISA/210 (second sheet) (January 2015)

35

**INTERNATIONAL SEARCH REPORT**
**Information on patent family members**

International application No.

**PCT/JP2023/025150**

| Patent document cited in search report | | | Publication date (day/month/year) | Patent family member(s) | | | Publication date (day/month/year) |
|---|---|---|---|---|---|---|---|
| WO | 2022/054645 | A1 | 17 March 2022 | JP | 2022-48109 | A | |
| | | | | JP | 2022-61031 | A | |
| | | | | JP | 2022-109932 | A | |
| JP | 2020-111715 | A | 27 July 2020 | (Family: none) | | | |
| JP | 2017-171794 | A | 28 September 2017 | (Family: none) | | | |
| JP | 2016-99671 | A | 30 May 2016 | (Family: none) | | | |
| JP | 2014-88026 | A | 15 May 2014 | (Family: none) | | | |
| KR | 10-2021-0043050 | A | 21 April 2021 | (Family: none) | | | |
| WO | 2022/145137 | A1 | 07 July 2022 | US | 2023/0025597 | A1 | |
| | | | | whole document | | | |
| | | | | EP | 4101640 | A1 | |
| | | | | CN | 115243889 | A | |
| WO | 2022/239270 | A1 | 17 November 2022 | US | 2023/0146524 | A1 | |
| | | | | whole document | | | |
| | | | | EP | 4116095 | A1 | |
| | | | | CN | 115623867 | A | |
| WO | 2023/106340 | A1 | 15 June 2023 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3271022 B
- WO 2018101349 A
- WO 2018221610 A
- WO 2019244986 A
- WO 2020022384 A
- JP 2019119138 A
- WO 2021201105 A
- JP 2022008024 A